(19) Europäisches Patentamt
European Patent Office
Office européen des brevets

(11) **EP 4 745 516 A1**

(12) **EUROPÄISCHE PATENTANMELDUNG**

(43) Veröffentlichungstag:
**20.05.2026   Patentblatt 2026/21**

(21) Anmeldenummer: 26153520.7

(22) Anmeldetag: **29.03.2022**

(51) Internationale Patentklassifikation (IPC):
**G01B 11/00** (2006.01)      **G01B 11/24** (2006.01)
**G01B 21/04** (2006.01)      **G02B 21/24** (2006.01)
**G02B 21/36** (2006.01)      **G06T 7/571** (2017.01)

(52) Gemeinsame Patentklassifikation (CPC):
**G01B 11/005; G01B 11/24; G01B 21/045;
G02B 21/244; G02B 21/367; G06T 7/571;**
G06T 2207/30164

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität:   **31.03.2021   DE 102021108238**

(62) Dokumentnummer(n) der früheren Anmeldung(en)
nach Art. 76 EPÜ:
**22164926.2 / 4 067 809**

(71) Anmelder:
• **Carl Zeiss Industrielle Messtechnik GmbH
73447 Oberkochen (DE)**
• **Carl Zeiss Microscopy GmbH
07745 Jena (DE)**

(72) Erfinder:
• **Aidukas, Tomas
5200 Brugg (CH)**
• **Schmidt, Sören
07743 Jena (DE)**
• **Plohmann, Daniel
89415 Lauingen (DE)**

(74) Vertreter: **Witte, Weller & Partner Patentanwälte
mbB
Postfach 10 54 62
70047 Stuttgart (DE)**

Bemerkungen:
Diese Anmeldung ist am 22.01.2026 als
Teilanmeldung zu der unter INID-Code 62 erwähnten
Anmeldung eingereicht worden.

(54) **COMPUTERIMPLEMENTIERTES VERFAHREN, VERFAHREN, MESSGERÄT UND COMPUTERPROGRAMMPRODUKT**

(57)   Die vorliegende Erfindung betrifft ein computer-implementiertes Verfahren (40) zum Erzeugen einer Tiefenkarte eines Bereichs einer Oberfläche eines Werkstücks (12), mit den folgenden Schritten: Empfangen (42) eines Fokalbildstapels, wobei der Fokalbildstapel eine Mehrzahl von Bildern des Werkstücks (12) aufweist, wobei die Bilder den Bereich der Oberfläche des Werkstücks (12) mit in einer Tiefenrichtung unterschiedlichen, definierten Fokalebenenpositionen (22) abbilden, wobei jedem Bild des Fokalbildstapels eine Fokalebenposition (22) zugeordnet ist, wobei Bildpunkte der Bilder jeweils einem entsprechendem Objektpunkt auf der Oberfläche des Werkstücks (12) zugeordnet sind; Bestimmen (44) eines Fokuswerts jedes Bildpunkts jedes Bildes des Fokalbildstapels; Einpassen (46) einer Funktion entlang der Tiefenrichtung (20) an die Fokuswerte derjenigen Bildpunkte der Bilder, die demselben Objektpunkt zugeordnet sind; Bestimmen (48) eines Tiefenwerts jedes Objektpunkts auf der Oberfläche des Werkstücks (12) in der Tiefenrichtung (20) basierend auf einem Extremum der eingepassten Funktion; und Erzeugen (50) der Tiefenkarte des Bereichs der Oberfläche des Werkstücks (12) basierend auf den bestimmten Tiefenwerten. Des Weiteren betrifft die vorliegende Erfindung ein Verfahren (60) zum Vermessen einer Oberfläche eines Werkstücks (12), ein Messgerät zum Vermessen einer Oberfläche eines Werkstücks (12) und ein Computerprogrammprodukt.

EP 4 745 516 A1

**Fig. 1**

**Beschreibung**

Die vorliegende Erfindung betrifft ein computerimplementiertes Verfahren zum Erzeugen einer Tiefenkarte eines Bereichs einer Oberfläche eines Werkstücks. Des Weiteren betrifft die vorliegende Erfindung ein Verfahren zum Vermessen einer Oberfläche eines Werkstücks mit einem optischen Sensor eines Messgeräts. Des Weiteren betrifft die vorliegende Erfindung ein Messgerät, insbesondere ein Koordinatenmessgerät oder ein Mikroskop, zum Vermessen einer Oberfläche eines Werkstücks. Des Weiteren betrifft die vorliegende Erfindung ein Computerprogrammprodukt.

Ein derartiges Verfahren und eine derartige Vorrichtung sind beispielsweise aus der Druckschrift EP2 598 836 B1 bekannt.

Messgeräte zum Vermessen der Oberfläche eines Werkstücks, auch Messobjekt genannt, sind im Stand der Technik allgemein bekannt. In der industriellen Messtechnik werden grundsätzlich Messgeräte benötigt, die 3D Informationen eines Werkstücks messen können. Dazu können in derartigen Messgeräten verschiedene Arten von Sensoren zur Anwendung kommen, um die Koordinaten eines zu vermessenden Werkstücks zu erfassen.

Beispielsweise sind hierzu taktil messende Sensoren bekannt. Hierbei wird die Oberfläche des zu vermessenden Werkstücks mit einem Taststift angetastet, dessen Koordinaten im Messraum ständig bekannt sind. Ein derartiger Taststift kann auch entlang der Oberfläche eines Werkstücks bewegt werden, so dass in einem solchen Messvorgang im Rahmen eines sog. "Scanning-Verfahrens" eine Vielzahl von Messpunkten in festgelegten zeitlichen Abständen erfasst werden kann.

Des Weiteren sind auch optische Messgeräte bekannt, in denen optische Sensoren verwendet werden. Die optischen Sensoren ermöglichen ein berührungsloses Erfassen der Koordinaten eines Werkstücks. In optischen Messgeräten wird das zu vermessende Werkstück auf einem Tisch als Werkstückhalter aufgespannt. Der Tisch bildet dabei eine X-Y-Ebene. Senkrecht von dieser Ebene, d.h. in Z-Richtung eines kartesischen Koordinatensystems, ist der optische Sensor von dem zu vermessenden Werkstück beabstandet.

Da herkömmliche optische Messgeräte, wie beispielsweise Mikroskope oder Koordinatenmessgeräte, nur 2D Daten aufnehmen können, wird die Bildtiefe oder Tiefeninformation in Z-Richtung mittels einer zusätzlichen Technik bestimmt.

Beispielsweise ist es bekannt, taktil messende Sensoren zusammen mit optischen Sensoren zu verwenden. Allerdings müssen taktile Sensoren zusammen mit dem optischen System in dem Messgerät integriert werden, wobei sich Kosten und Komplexität des Messgeräts erhöhen. Des Weiteren muss der taktile Sensor in Kontakt mit dem Werkstück sein, was nicht immer wünschenswert ist.

Eine nicht invasive und günstige Lösung besteht darin, die Tiefeninformation in Z-Richtung mittels optischen Messungen zu bestimmen. Bildunschärfe, die durch optisches defokusieren bewirkt wird, ändert sich in vorhersagbarer Weise. Das optische System des optischen Sensors hat eine Fokalebene, die eine Ebene größter Schärfe ist. Wird ein Objektpunkt, der auf der Oberfläche des Werkstücks liegt, auf die Fokalebene zu bewegt, wird die Abbildung des Objektpunkts schärfer. Wird der Objektpunkt von der Fokalebene weg bewegt, wird die Abbildung des Objektpunkts unschärfer. Ist der Objektpunkt in der Fokalebene angeordnet, ist die Abbildung des Objektpunkts am schärfsten. Die Bildunschärfe kann somit durch Variation des Abstands zwischen dem Werkstück und dem optischen System kontrolliert werden. Durch das Aufnehmen von Bildern, während das Werkstück durch den Fokus bewegt wird, wird ein Fokalbildstapel erzeugt. Auf Basis des Fokalbildstapels kann eine Tiefeninformation der Objektpunkte mittels einer Technik, die Shape from Focus (SFF) genannten wird, extrahiert werden.

Die SFF Technik ist bisher hauptsächlich in Verbindung mit gering auflösenden Messtechniken, beispielsweise der Fotographie, bekannt, wobei ein visuell zufriedenstellendes Aussehen der 3D Informationen im Vordergrund steht. Daher sind die meisten Implementierungen der SFF Technik nicht für die industrielle Messtechnik geeignet, wo hohe Reproduzierbarkeit und hohe Genauigkeit erforderlich sind.

In der Mikroskopie sind Verfahren bekannt, die die SFF Technik verwenden. Beispielsweise zeigt die Druckschrift EP 2 598 836 A1 ein Verfahren zur Kompensation von Beleuchtungsdefiziten im mikroskopischen "Shape from Focus (SFF)", wobei zuerst das Reflexionsvermögen der Szene unter Verwendung eines Projektorkamerasystems geschätzt wird und dann das mikroskopische "Shape from Focus (SFF)" auf einen Stapel von Reflexionskarten anstatt auf die ursprünglichen Bilddaten angewendet wird.

Des Weiteren ist derartige Verfahren auch in dem Artikel "Shape From Focus Sytem" von Shree K. Nayar, IEEE Conference on Computer Vision and Pattern Recognition (CVPR), 1992, 302-308 sowie in dem Artikel "Focus Variation Instruments" von Franz Helmli, Kapitel 7 aus dem Buch "Optical Measurement of Surface Topography", Seiten 131-166, Springer Verlag beschrieben.

Vor diesem Hintergrund ist es eine technische Aufgabe der vorliegenden Erfindung, ein Verfahren zum Vermessen einer Oberfläche eines Werkstücks und ein entsprechendes Messgerät bereitzustellen, mittels dem eine Tiefenkarte eines Bereichs der Oberfläche des Werkstücks mit hoher Reproduzierbarkeit und hoher Genauigkeit erzeugt werden kann.

Gemäß einem ersten Aspekt der Erfindung wird ein computerimplementiertes Verfahren zum Erzeugen einer Tiefenkarte eines Bereichs einer Oberfläche eines Werkstücks bereitgestellt, mit den folgenden Schritten:

- Empfangen eines Fokalbildstapels, wobei der Fokalbildstapel eine Mehrzahl von Bildern des Werkstücks aufweist, wobei die Bilder den Bereich der Oberfläche des Werkstücks mit in einer Tiefenrichtung unterschiedlichen, definierten Fokalebenenpositionen abbilden, wobei jedem Bild des Fokalbildstapels eine Fokalebenenposition zugeordnet ist, wobei Bildpunkte der Bilder jeweils einem entsprechendem Objektpunkt auf der Oberfläche des Werkstücks zugeordnet sind;

- Bestimmen eines Fokuswerts jedes Bildpunkts jedes Bildes des Fokalbildstapels;

- Einpassen einer Funktion entlang der Tiefenrichtung an die Fokuswerte derjenigen Bildpunkte der Bilder, die demselben Objektpunkt zugeordnet sind;

- Bestimmen eines Tiefenwerts jedes Objektpunkts auf der Oberfläche des Werkstücks in der Tiefenrichtung basierend auf einem Extremum der eingepassten Funktion; und

- Erzeugen der Tiefenkarte des Bereichs der Oberfläche des Werkstücks basierend auf den bestimmten Tiefenwerten.

Gemäß einem zweiten Aspekt der Erfindung wird ein Verfahren zum Vermessen einer Oberfläche eines Werkstücks mit einem optischen Sensor eines Messgeräts bereitgestellt, wobei der optische Sensor und das Werkstück in einer Tiefenrichtung voneinander beabstandet sind, mit den folgenden Schritten:

- Erfassen einer Mehrzahl von Bildern eines Bereichs der Oberfläche des Werkstücks mittels des optischen Sensors, wobei die Bilder jeweils den Bereich der Oberfläche des Werkstücks mit in der Tiefenrichtung unterschiedlichen, definierten Fokalebenenpositionen abbilden, wobei jeder Bildpunkt jedes Bildes einem entsprechendem Objektpunkt auf der Oberfläche des Werkstücks zugeordnet ist, und wobei die erfassten Bilder einen Fokalbildstapel bilden;

- Erzeugen einer Tiefenkarte der Oberfläche des Werkstücks mittels des Verfahrens nach dem ersten Aspekt der Erfindung.

Gemäß einem dritten Aspekt der Erfindung wird ein Messgerät, insbesondere ein Koordinatenmessgerät oder ein Mikroskop, zum Vermessen einer Oberfläche eines Werkstücks bereitgestellt, wobei das Messgerät einen Werkstückhalter für das Werkstück, einen optischen Sensor und eine Steuereinrichtung aufweist, wobei der optische Sensor dazu ausgebildet ist, Bilder eines Bereichs der Oberfläche des Werkstücks zu erfassen, wobei der optische Sensor und das Werkstück in einer Tiefenrichtung voneinander beabstandet sind, wobei die Steuereinrichtung dazu eingerichtet ist, die folgenden Schritte durchzuführen:

- Erzeugen einer Tiefenkarte der Oberfläche des Werkstücks mittels des Verfahrens nach dem ersten Aspekt der Erfindung.

Es kann dabei vorgesehen sein, dass die Steuereinrichtung des Weiteren dazu eingerichtet ist, insbesondere vor dem Erzeugen der Tiefenkarte, die folgenden Schritte durchzuführen:

- Steuern des optischen Sensors derart, dass eine Mehrzahl von Bildern eines Bereichs der Oberfläche des Werkstücks mittels des optischen Sensors erfasst wird, wobei die Bilder jeweils den Bereich der Oberfläche des Werkstücks mit in der Tiefenrichtung unterschiedlichen, definierten Fokalebenenpositionen abbilden, wobei jeder Bildpunkt jedes Bildes einem entsprechendem Objektpunkt auf der Oberfläche des Werkstücks zugeordnet ist, und wobei die erfassten Bilder einen Fokalbildstapel bilden.

Gemäß einem vierten Aspekt der Erfindung wird ein Computerprogrammprodukt mit einem Computerprogramm bereitgestellt, das Programmcodemittel zur Durchführung eines Verfahren nach dem ersten Aspekt der Erfindung aufweist, wenn das Computerprogramm auf einem Messgerät ausgeführt wird. Des Weiteren kann auch ein Computerprogrammprodukt bereitgestellt sein, das Befehle umfasst, die bei der Ausführung des Programms durch einen Computer diesen veranlassen, die Schritte des Verfahrens nach dem ersten Aspekt der Erfindung auszuführen.

Vorteilhafterweise wird das neue Verfahren unter Verwendung einer Verarbeitungseinheit oder einer Steuereinrichtung implementiert, die ein Mehrzweckcomputer oder ein Spezialcomputer sein kann, wobei ein angemessenes Computerprogramm oder Computerprogrammprodukt gespeichert und ausgeführt wird, wobei das Computerprogramm oder das Computerprogrammprodukt zum Vermessen des Bereichs der Oberfläche des Werkstücks und/oder zum Erzeugen der Tiefenkarte gemäß den zuvor genannten Verfahren gestaltet und ausgebildet ist.

Unter einem Werkstück ist ein Objekt, insbesondere ein Messobjekt, zu verstehen, dass vermessen wird. Das Werkstück weist eine Oberfläche auf. Bilder eines Bereichs der Oberfläche können mit einem optischen Sensor eines Messgeräts erfasst. Das Messgerät kann insbesondere ein Koordinatenmessgerät oder ein Mikroskop sein. Der optische Sensor kann beispielsweise einen Bildsensor und ein optisches System aufweisen. Der Bildsensor kann beispielsweise ein ladungsgekoppelter Halbleiterelementsensor sein, der auch CCD (charge-couple device) Sensor genannt wird. Der CCD Sensor kann ein monochromer Sensor oder ein Farbsensor sein. Das optische System kann den Bereich der Oberfläche des Werkstücks auf dem Bildsensor abbilden. Das optische System kann insbesondere ein zumindest objektseitig telezentrisches Objektiv aufweisen.

Ein mit dem optischen Sensor erfasstes Bild hat eine Mehrzahl von Bildpunkten. Jeder Bildpunkt bildet einen Objektpunkt des Bereichs der Oberfläche des Werkstücks ab. Die Anzahl der Bildpunkte entspricht somit der Anzahl der abgebildeten Objektpunkte. Derzeitige optische Sensoren können Auflösungen von mehreren Megapixeln haben. Die Anzahl der Bildpunkte eines erfassten Bildes und entsprechend auch die Anzahl der abgebildeten Objektpunkte entsprechen der Anzahl der Pixel des optischen Sensors. Die erfassten Bilder können somit mehrere Millionen an Bildpunkte aufweisen.

Während des Erfassens der Bilder wird die Fokalebenenposition des optischen Sensors in einer Tiefenrichtung relativ zu dem Werkstück verändert, um jedes Bild mit einer unterschiedlichen, definierten Fokalebenenposition zu erfassen.

Vorzugsweise sind der optische Sensor und das Werkstück in der Tiefenrichtung relativ zueinander bewegbar, so dass ein Abstand in der Tiefenrichtung zwischen dem Werkstück und dem optischen Sensor veränderbar ist. Beispielsweise kann das Messgerät eine Antriebseinrichtung aufweisen, die dazu ausgebildet ist, den optischen Sensor und das Werkstück in der Tiefenrichtung relativ zueinander zu bewegen. Während des Erfassens der Bilder wird kann dann der Abstand des optischen Sensors zu dem Werkstück in der Tiefenrichtung verändert werden, um die Fokalebenenposition für jedes Bild zu verändern. Die Tiefenrichtung kann eine Z-Richtung eines kartesischen Koordinatensystems sein, wobei die erfassten Bilder eine Abbildung des Bereichs der Oberfläche des Werkstücks in der X- und Y-Richtung sind. Mit anderen Worten ist die Abbildung der Bilder senkrecht zu der Tiefenrichtung. Die Bilder werden dabei in unterschiedlichen, definierten Abständen zu dem Werkstück aufgenommen. "Definiert" bedeutet in diesem Zusammenhang, dass die Abstände, in denen die Bilder erfasst werden, im Voraus festgelegt und somit bekannt sind. Beispielsweise können die Bilder in $50\,\mu m$ Schritten aufgenommen werden.

Da die Bilder aus unterschiedlichen Abständen zu dem Werkstück aufgenommen werden, variiert die Fokalebene bzw. die Ebene größter Schärfe des optischen Sensors zwischen den Bildern. Die optische Einstellung des optischen Sensors, insbesondere der Fokusabstands des Objektivs, kann dabei konstant bleiben. Jedes Bild ist mit einer anderen Fokalebene erfasst. Die Bilder bilden somit gemeinsam einen Fokalbildstapel. Jedem Bild des Fokalbildstapels ein definierter Abstand zugeordnet ist. Der Abstand eines Bildes entspricht einem Tiefenwert in der Tiefenrichtung, insbesondere einer Z-Position in der Z-Richtung. Mit anderen Worten bilden die erfassten Bilder jeweils den Bereich der Oberfläche des Werkstücks aus unterschiedlichen, definierten Abständen zu dem Werkstück in einer Tiefenrichtung ab, wobei jedem Bild des Fokalbildstapels ein Abstand zugeordnet ist.

Alternativ kann während des Erfassens der Bilder die Änderung der Fokalebenenposition durch ein Nachfokussieren der Optik bzw. ein Verändern des Fokusabstands des Objektivs des optischen Sensors erreicht werden. Das heißt man ordnet jeder Fokuseinstellung am Objektiv einen entsprechenden Abstand des optischen Sensors zu der eingestellten Fokalebene in der Tiefenrichtung zu. Auf diese Weisen kann die Fokalebene bzw. die Ebene größter Schärfe des optischen Sensors au optischem Weg zwischen den Bildern variiert werden, um den Fokalbildstapel zu bilden. Der Abstand zwischen dem Werkstück und dem optischen Sensor kann dann konstant bleiben.

Jedes Bild weist die gleiche Anzahl an Bildpunkten auf. Jeder Bildpunkt eines Bildes bildet einen entsprechenden Objektpunkt des Werkstücks aus dem Bereich der Oberfläche des Werkstücks ab. Jeder Bildpunkt eines Bilds ist somit einem entsprechenden Objektpunkt auf der Oberfläche dem Werkstück zugeordnet. Ein Objektpunkt kann auch als Messpunkt bezeichnet werden. Jeder Objektpunkt auf der Oberfläche des Werkstücks weist eine Position in dem kartesischen Koordinatensystem auf, insbesondere eine X-Position in der X-Richtung, eine Y-Position in der Y-Richtung und eine Z-Position in der Z-Richtung. Die Z-Position in der Z-Richtung kann auch als Tiefenwert in der Tiefenrichtung bezeichnet werden. Da die erfassten Bilder jeweils denselben Bereich der Oberfläche des Werkstücks abbilden, sind die Bildpunkte der Bilder denselben Objektpunkten zugeordnet. Insbesondere sind die Bildpunkte der Bilder mit denselben X- und Y-Koordinaten demselben Objektpunkt zugeordnet. Dies bedeutet, dass jedem Objektpunkt aus jedem Bild jeweils ein Bildpunkt zugeordnet ist.

Der Fokalbildstapel wird ausgewertet, um die Tiefenkarte zu erzeugen. Hierzu wird der Fokalbildstapel in dem neuen Verfahren zunächst empfangen. Der Fokalbildstapel, insbesondere die Bilder des Fokalbildstapels, kann vor dem Empfangen oder in dem Schritt des Empfangens vorbearbeitet werden. Beispielsweise können die Bilder zugeschnitten werden, so dass die Bildauswertung zur Erzeugung der Tiefenkarte nur in bestimmten, insbesondere in den ausgeschnittenen Bereichen, erfolgt.

Für jeden Bildpunkt jedes Bildes des Fokalbildstapels wird dann ein Fokuswert bestimmt. Der Fokuswert gibt ein Maß an, wie scharf der jeweilige Bildpunkt dargestellt ist. Zur Bestimmung des Fokuswerts kann beispielsweise die Helligkeit, ein Kontrast-Wert oder ein Grau-Wert eines Bildpunkts betrachtet werden. Insbesondere kann zur Bestimmung des Fokuswerts ein Gradient der Helligkeit, des Kontrast-Werts oder des Grau-Werts zu den umliegenden Bildpunkten bestimmt werden. Umso größer der Gradient ist, umso schärfer ist der Bildpunkt und umso größer ist der Fokuswert.

Um den Tiefenwert eines Objektpunkts zu bestimmen, werden die jeweiligen Bildpunkte des Fokalbildstapels gemeinsam betrachtet, die dem entsprechenden Objektpunkt zugeordnet sind. Jeder dieser Bildpunkte ist dabei von unterschiedlichen Bildern. Somit ist jedem Bildpunkt ein anderer Abstand und dementsprechend ein anderer Tiefenwert in der Tiefenrichtung zugeordnet. Zur Bestimmung des Tiefenwerts des Objektpunkts wird dann eine Funktion in bzw. entlang der Tiefenrichtung an die Fokuswerte der entsprechenden Bildpunkte angepasst. Die Funktion kann auch als Schärfefunktion bezeichnet werden. Wie eingangs beschrieben, ist die Bildschärfe maximal, wenn der Objektpunkt in der Fokalebene des optischen Sensors liegt. Wird der Abstand zu dem Werkstück verkürzt oder verlängert, nimmt die Bildschärfe ab. Der Fokuswert kann sich proportional oder antiproportional zu der Bildschärfe verhalten. Aus dem Extremum der eingepassten Funktion an die Fokuswerte der Bildpunkte eines entsprechenden Objektpunkts lässt sich somit der Tiefenwert des Objektpunkts bestimmen. Als Funktionen eignen sich besonders solche, die achsensymmetrisch zu einem Extremum, insbesondere zu einem globalen Extremum, sind. Das Extremum kann ein Maximum oder ein Minimum der eingepassten Funktion sein. Das Extremum ist vorzugsweise ein Maximum der eingepassten Funktion sein, wenn sich der Fokuswert proportional zu der Bildschärfe verhält. Das Extremum kann aber auch ein Minimum der eingepassten Funktion sein, wenn sich der Fokuswert antiproportional zu der Bildschärfe verhält.

Sobald für jeden Objektpunkt aus dem erfassten Bereich der Oberfläche des Werkstücks ein Tiefenwert bestimmt ist, kann eine Tiefenkarte des Bereichs der Oberfläche des Werkstücks erzeugt werden. Die Tiefenkarte stellt ein Tiefen- oder Höhenprofil des Werkstücks in dem erfassten Bereich dar. Auf Basis der Tiefenkarte und des Fokalbildstapels kann dann ein extended-depth-of-field (EDOF) Bild erzeugt werden, das ein Bild des Bereichs der Oberfläche des Werkstücks mit erweiterter Feldtiefe ist.

Die Antriebseinrichtung kann den Abstand zwischen dem Werkstück und dem optischen Sensor einstellen. Dazu kann die Antriebseinrichtung den Werkstückhalter und/oder den optischen Sensor in der Tiefenrichtung bewegen. Die Antriebseinrichtung kann beispielsweise einen Piezo-elektrischen Antrieb, einen Direktantrieb oder einen Spindelantrieb aufweisen. Ein Spindelantrieb ist besonders geeignet, da dieser eine hohe Auflösung hat, große Lasten bewegen kann und über einen großen Erfassungsbereich in der Tiefenrichtung aufweist.

Die Antriebseinrichtung und der optische Sensor können mittels der Steuereinrichtung des Messgeräts gesteuert werden. Dazu kann die Steuereinrichtung beispielsweise eine Regelungseinheit aufweisen, die Steuerbefehle an den optischen Sensor und die Antriebseinrichtung schicken kann. Die Berechnungsschritte zum Erzeugen der Tiefenkarte können ebenfalls mittels der Steuereinrichtung des Messgeräts durchgeführt werden. Dazu kann die Steuereinrichtung beispielsweise eine Datenverarbeitungseinheit aufweisen, die die Schritte zum Erzeugen der Tiefenkarte durchführt.

Die Fähigkeit hoch-genaue, 3D gemessene extended-depth-of-field (EDOF) Bilder eines Objekts zu erhalten hängt davon ab, wie der SFF Algorithmus implementiert ist. Insbesondere hängt die Genauigkeit der 3D-Messung davon ab, wie die Tiefenwerte der Tiefenkarte auf Basis des Fokalbildstapels bestimmt werden.

Die Bilder für den Fokalbildstapel werden in definierten, beispielsweise diskreten, Abständen, insbesondere Schritten, aufgenommen und die Schärfe jedes einzelnen Bildpunkts des Fokalbildstapels wird evaluiert. Durch das Lokalisieren der Position des schärfsten Bildpunkts in dem Fokalbildstapel in der Tiefenrichtung erhält man eine Tiefeninformation für das Werkstück. Der einfachste Weg, um die Tiefenkarte zu erzeugen, würde darin bestehen, Tiefenwerte den Indizes des Fokalbildstapels in der Tiefenrichtung zuzuordnen. Mit anderen Worten könnte man für jeden Objektpunkt den schärfsten Bildpunkt in dem Fokalbildstapel bestimmen und den entsprechenden Tiefenwert dem Objektpunkt zuordnen. Derartige Tiefenkarten haben aber eine Tiefenauflösung, die durch das Abtasten, insbesondere die Schrittweite des Abtastens, des Fokalbildstapels festgesetzt ist. Wenn beispielsweise die Bilder in Schritten von $50\,\mu m$ aufgenommen werden, entspricht dies dann auch der Tiefenauflösung.

Wie eingangs beschrieben, steht die Schärfe bzw. Intensität jedes Bildpunkts in dem Fokalbildstapel in direkter und vorhersagbarer Beziehung zu der Unschärfe. Die Intensität jedes Bildpunkts ändert sich entsprechend wie der Bildpunkt scharf oder unscharf eingestellt ist. Das Intensitätsprofil in der Tiefenrichtung folgt dabei einer Kurve, die im "schärfsten Punkt" ein Maximum hat, und zu beiden Seiten des Maximums abfällt. Die Schärfe der Bildpunkte des Fokalbildstapels folgt somit ebenfalls einer derartigen, redimensionierten Kurve. Indem nun für jeden Objektpunkt eine Funktion an die entsprechenden Bildpunkte in der Tiefenrichtung angepasst wird, kann aus dem Maximum der Funktion ein genauerer Tiefenwert für den entsprechenden Objektpunkt ermittelt werden. Auf diese Weise ist es möglich, eine hoch-genaue Tiefenkarte zu erhalten und die Einschränkung, die durch das Abtasten eines Fokalbildstapels entstehen, zu lindern.

Mit anderen Worten kann dadurch eine Tiefenkarte eines Bereichs der Oberfläche des Werkstücks mit hoher Reproduzierbarkeit und hoher Genauigkeit erzeugt werden und die Oberfläche des Werkstücks mit hoher Reproduzierbarkeit und hoher Genauigkeit vermessen werden.

Die eingangs gestellte technische Aufgabe wird somit vollumfänglich gelöst.

In einer ersten Ausgestaltung ist jedem Bild des Fokalbildstapels ein Tiefenwert in der Tiefenrichtung zugeordnet.

Auf Basis der Tiefenwerte der Bilder kann die Funktion für die Bildpunkte eines Objektpunkts entsprechend eingepasst werden und der Tiefenwert für den entsprechenden Objektpunkt bestimmt werden. Der Tiefenwert des Objektpunkts, insbesondere die z-Position, ergibt sich dabei direkt aus dem Tiefenwert, an dem die eingepasste Funktion extremal, vorzugsweise maximal, ist. Insbesondere können die Tiefenwerte der Bilder in diskreten Schritten aufeinander folgen. Beispielsweise können die Bilder in $50\,\mu m$ Schritten aufgenommen werden. Dies bedeutet, dass sich der Abstand der Bilder in der Tiefenrichtung zu dem Werkstück von Bild zu Bild um $50\,\mu m$ ändert, insbesondere größer oder kleiner wird.

In einer weiteren Ausgestaltung wird der Fokuswert jedes Bildpunkts auf Basis einer Schärfe des Bildpunkts bestimmt.

Wie eingangs bereits erläutert, lässt sich der Fokuswert eines Bildpunkts beispielsweise auf Basis eines Gradienten zu den umgebenden Bildpunkten des entsprechenden Bildes bestimmen.

Alternativ können die Fokuswerte einer Mehrzahl von Bildpunkten, insbesondere einer Gruppe von Bildpunkten, gemeinsam bestimmt werden. Die Bildpunkte können dazu beispielsweise in Gruppen, vorzugsweise benachbarter, Bildpunkte aufgeteilt werden, wobei für jede Gruppe von Bildpunkten ein gemeinsamer Fokuswert bestimmt werden kann.

In einer weiteren Ausgestaltung ist die einzupassende Funktion eine Gauß-Funktion, wobei der Tiefenwert jedes Objektpunkts dem Erwartungswert, auch Median oder Zentralwert genannt, der jeweiligen Gauß-Funktion entspricht.

Eine Gauß-Funktion weist grundsätzlich bei ihrem Erwartungswert ein globales Maximum auf. Wenn somit eine Gauß-Funktion an die Fokuswerte der Bildpunkte eines Objektpunkts angepasst wird, lässt sich der Tiefenwert des Objektpunkts auf Basis des Erwartungswerts bestimmen. Des Weiteren folgt das Intensitätsprofil bzw. das Schärfeprofil in der Tiefenrichtung im Wesentlichen einer Gauß-Kurve, wenn der Abstand zu dem Werkstück in der Tiefenrichtung variiert wird. Wenn daher eine Gauß-Kurve an jeden Punkt des abzubildenden Bereichs, insbesondere für jeden Objektpunkt, eingepasst wird, lässt sich damit die Genauigkeit und Reprozierbarkeit der Tiefenkarte weiter verbessern.

In einer weiteren Ausgestaltung werden Parameter, insbesondere Einpassungsparameter, der Gauß-Funktion über ein lineares Gleichungssystem $Ax = B$ bestimmt, wobei $A$ eine 3x3 Matrix ist, die die Koeffizienten des Gleichungssystems repräsentiert ($A$ ist abhängig von der Anzahl der Bilder und den Tiefenwerten der Bilder), $B$ ein Vektor ist, der die Lösungen des Gleichungssystems aufweist ($B$ ist abhängig von den Tiefenwerten der Bilder und den entsprechenden Fokuswerten der jeweiligen Bildpunkte), und $x$ ein Vektor ist, der die zu bestimmenden Parameter (Erwartungswert, Standardabweichung, Amplitude) der Gauß-Kurve aufweist, wobei der Tiefenwert (Erwartungswert) auf Basis der Parameter bestimmt wird.

Grundsätzlich lässt sich der natürliche Logarithmus auf die Gauß-Funktion anwenden und die resultierende Gleichung in linearisierter Form durch linearisierte Parameter darstellen. Die zu bestimmenden Parameter der Gaußfunktion können diese linearisierten Parameter sein. Der Erwartungswert, die Standardabweichung und/oder die Amplitude können daher auf Basis der linearisierten Parameter bestimmt werden. Insbesondere kann die Mehrzahl der erfassten Bilder mehr als drei Bilder aufweisen. Mit anderen Worten kann die Anzahl der erfassten Bilder, die den Fokalbildstapel bilden, drei übersteigen. Da eine Gauß-Funktion mittels drei Parametern darstellbar ist, ist die Gauß-Funktion überbestimmt, wenn mehr als drei Bilder aufgenommen werden. Zur Anpassung bzw. Anfitten der Gauß-Funktion an den tiefenabhängigen Schärfenverlauf kann daher die Methode der kleinsten Quadrate verwenden werden. Durch Anwendung der Methode der kleinsten Quadrate auf die zuvor genannte linearisierte Gleichung mit den linearisierten Parametern ergibt sich das Gleichungssystem $Ax = B$. Dieses Gleichungssystem ist überbestimmt. Die Matrix $A$ hängt dabei von der Anzahl der entsprechenden Bildpunkte und den Tiefenwerten bzw. Abständen der jeweiligen Bildpunkte ab. Die Anzahl der Bildpunkte, die dem jeweiligen Objektpunkt zugeordnet sind, entspricht der Anzahl der Bilder des Fokalbildstapels. Dementsprechend entsprechen die Tiefenwerte bzw. Abstände der jeweiligen Bildpunkte ebenfalls den Tiefenwerten bzw. Abständen der Bilder des Fokalbildstapels. Die Matrix $A$ ist somit für alle Objektpunkte dieselbe. Der Lösungsvektor $B$ hängt von den Tiefenwerten bzw. Abständen der jeweiligen Bildpunkte und den bestimmten Fokuswerten der jeweiligen Bildpunkte ab. Diese linearisierte Methode zum Anpassen/Anfitten der Gaußkurve, d.h. die Bestimmung der Parameter der Gaußfunktion bestimmt werden, wird auch Caruana-Methode oder Caruana-Algorithmus genannt. Die Parameter der Gaußfunktion werden somit mittels des Caruana-Algorithmus bestimmt.

In einer weiteren Ausgestaltung werden die Parameter mittels der folgenden Gleichung bestimmt: $x = A^{-1} B$, insbesondere wobei $A^{-1} B$ einer Optimierungslösung eines überbestimmten Gleichungssystems basierend auf der Methode der kleinsten Quadrate entspricht.

Im Allgemeinen ist es bekannt, dass zum Einpassen einer Funktion an gemessene Daten die Parameter der Funktion mittels nichtlinearer Optimierungs-Methoden bestimmt werden. Diese Lösungsverfahren sind allerdings sehr zeitaufwendig und können unter Umständen mehrere Stunden dauern. In der industriellen Messtechnik ist es wünschenswert, dass die Messergebnisse nicht nur hochgenau, sondern auch in relativ kurzer Zeit bereitgestellt werden können, insbesondere in wenigen Sekunden. Durch die Linearisierung des Optimierungsproblems entsprechend des Caruana-Algorithmus können äußerst effizient numerische Bibliotheken zur Lösung mit Hilfe der kleinsten Quadrate verwendet werden.

In einer weiteren Ausgestaltung weist das Verfahren des Weiteren den folgenden Schritt auf:

- Korrigieren mindestens eines Abbildungsfehlers der Bilder des Fokalbildstapels in der Tiefenkarte, wobei der mindestens eine Abbildungsfehler ein Kippfehler und/oder ein Bildfeldwölbung-Fehler und/oder ein Astigmatismus-Fehler ist.

Der Schritt des Korrigierens wird insbesondere durchgeführt, nachdem die Tiefenkarte erzeugt worden ist oder nachdem alle Tiefenwerte der Objektpunkte bestimmt worden sind. Alle optischen Systeme weisen innerhalb der Fertigungstoleranzen Abbildungsfehler auf, die auch als optische Aberrationen bezeichnet werden. Diese führen zu einem systematischen Messfehler in den berechneten Tiefenwerten. Feldkrümmung und Astigmatismus sind besonders problematisch, da diese die Tiefenwerte der Tiefenkarte verzerren. Auch der Kippfehler oder Neigungsfehler kann eine nicht vernachlässigbare Größe annehmen und kann so korrigiert werden. Es können zumindest die Aberrationen erster und zweiter Ordnung im Aberrationsschema nach Zernike berücksichtigt und korrigiert werden. Durch den vorgeschlagenen Korrekturmechanismus kann eine digitale Aberrationskorrektur durchgeführt werden, mittels der die Genauigkeit der Tiefenkarte weiter erhöht wird.

In einer weiteren Ausgestaltung ist zum Korrigieren des Kippfehlers jedem Punkt der Tiefenkarte ein erster Korrekturwert zugeordnet, wobei der Tiefenwert jedes Punkts der Tiefenkarte mittels des entsprechenden ersten Korrekturwerts korrigiert wird.

Das optische System kann beispielsweise einen Abbildungsfehler aufweisen, der dazu führt, dass das Abbild des Werkstücks gekippt auf dem aufnehmenden Bildsensor dargestellt wird. Der erste Korrekturwert bildet diese Verkippung ab und ermöglicht es, die Tiefenwerte der Tiefenkarte zu korrigieren, in dem die Verkippung herausgerechnet wird. Die Korrektur des jeweiligen Tiefenwerts kann insbesondere durch Subtraktion des entsprechenden ersten Korrekturwerts von dem jeweiligen Tiefenwert erfolgen. Der erste Korrekturwert kann insbesondere vorberechnet oder vorbestimmt sein. Auf diese Weise lässt sich ein Kippfehler in den Tiefenwerten korrigieren. Durch Korrektur des Kippfehlers wird die Genauigkeit der Tiefenkarte weiter erhöht.

In einer weiteren Ausgestaltung ist zum Korrigieren des Bildfeldwölbung-Fehlers jedem Punkt der Tiefenkarte ein zweiter Korrekturwert zugeordnet, wobei der Tiefenwert jedes Punkts der Tiefenkarte mittels des entsprechenden zweiten Korrekturwerts korrigiert wird.

Wenn die Optik des optischen Systems eine Bildfeldwölbung aufweist, wird das Bild nicht auf einer Ebene, sondern auf einer gewölbten Fläche erzeugt. Es ist daher ein sogenannter Lagefehler. Die Position des Strahlenschnittpunkts längs der optischen Achse ist dann abhängig von der Position der Bildpunkte, das heißt für jeden einzelnen Bildpunkt wird ein Bildfeldwölbungswert zugeordnet. Je weiter Objekt- und damit Bildpunkte von der optischen Achse entfernt sind, umso mehr ist der Bildpunkt in Achsrichtung, sprich in der Tiefenrichtung, verschoben. Mit anderen Worten kann das optische System einen Abbildungsfehler aufweisen, der dazu führt, dass das Abbild des Werkstücks gewölbt auf dem aufnehmenden Bildsensor dargestellt wird. Der zweite Korrekturwert bildet diese Wölbung ab und ermöglicht es, die Tiefenwerte der Tiefenkarte zu korrigieren, in dem die Wölbung herausgerechnet wird. Die Korrektur des jeweiligen Tiefenwerts kann insbesondere durch Subtraktion des entsprechenden zweiten Korrekturwerts von dem jeweiligen Tiefenwert erfolgen. Der zweite Korrekturwert kann insbesondere vorberechnet oder vorbestimmt sein. Auf diese Weise lässt sich ein Bildfeldwölbung-Fehlers in den Tiefenwerten korrigieren. Durch Korrektur des Bildfeldwölbung-Fehlers wird die Genauigkeit der Tiefenkarte weiter erhöht.

In einer weiteren Ausgestaltung wird zum Korrigieren des Astigmatismus-Fehlers eine Winkelkarte des Bereichs der Oberfläche des Werkstücks erzeugt, wobei jedem Punkt der Tiefenkarte ein dritter Korrekturwert und ein vierter Korrekturwert zugeordnet ist, wobei der Tiefenwert jedes Punkts der Tiefenkarte basierend auf dem dritten Korrekturwert, dem vierten Korrekturwert und der Winkelkarte korrigiert wird.

Astigmatismus ist eine Aberration der "schiefen" Strahlen. Ein schief einfallendes Strahlenbündel wird in der Meridional- und der Sagittalebene unterschiedlich stark gebrochen. In Richtung der Meridionalebene ist eine Linse perspektivisch verkürzt, woraus eine kürzere Brennweite resultiert als in der Sagittalebene. Mit anderen Worten ist Astigmatismus richtungsabhängig, insbesondere abhängig von Richtungen der Kanten in den Abbildungen der Bilder. Der Astigmatismus kann für jeden Punkt über eine winkelabhängige Funktion, insbesondere Modell- oder Fitfunktion, mit mindestens zwei Parametern beschrieben werden, die den ersten und zweiten Korrekturwert aufweisen. Mit anderen Worten ist das Astigmatismus-Modell eine Anpassung der über den Kreisazimuth dargestellten Tiefenkartenabweichung. Insbesondere kann der Astigmatismus als Linearkombination aus zwei radialsymmetrischen Sinusfunktionen modelliert werden. Dabei entspricht der dritte Korrekturwert dem Koeffizienten in der ersten Sinusfunktion und der vierte Koeffizient dem Koeffizienten in der zweiten Sinusfunktion. Vorzugsweise sind die beiden Sinusfunktionen um $\pi/2$ verschoben. Der dritte Korrekturwert und der vierte Korrekturwert stellen somit zwei Korrekturwerte in zwei senkrecht zueinander stehenden Richtungen dar. Zur Korrektur des Astigmatismus wird eine Winkelkarte des Bereichs der Oberfläche des Werkstücks erzeugt. Die Winkelkarte wird basierend auf einem Bildgradienten bestimmt. Der Bildgradient kann basierend auf einem EDOF Bild oder dem gesamten oder einem Teil des Fokalbildstapels des Bereichs des Werkstücks für jeden Punkt bestimmt werden. Dazu wird für jeden Punkt ein Bildgradient berechnet. Der Bildgradient bestimmt sich aus einer Änderung der Helligkeit zu umliegenden Bildpunkten. Die Richtung des Bildgradienten kann mittels eines Winkels dargestellt werden. Somit ist in der Winkelkarte jedem Punkt ein Winkel zugeordnet, der die Richtung des Bildgradienten angibt. Mit anderen Worten stellt die Winkelkarte für jeden Punkt der Tiefenkarte den entsprechenden Winkel des Bildgradienten dar. Basierend auf diesem Winkel kann zur Korrektur des Tiefenwerts des jeweiligen Punkts der Tiefenkarte dann der Anteil des dritten und des vierten Korrekturwerts berechnet werden. Der Anteil des dritten Korrekturwerts kann insbesondere durch das Produkt aus dem dritten Korrekturwert mit dem Sinus des Winkels des jeweiligen Punkts bestimmt werden. Entsprechend kann auch der Anteil des vierten Korrekturwerts durch das Produkt aus dem vierten Korrekturwert mit dem Cosinus des Winkels des jeweiligen Punkts bestimmt werden. Die Korrektur des jeweiligen Tiefenwerts kann insbesondere durch Subtraktion der Summe der Anteile des dritten und vierten Korrekturwerts von dem jeweiligen Tiefenwert erfolgen. Der dritte Korrekturwert und der vierte Korrekturwert können insbesondere vorberechnet oder vorbestimmt sein. Auf diese Weise lässt sich ein Astigmatismus-Fehlers in den Tiefenwerten korrigieren. Durch Korrektur des Astigmatismus -Fehlers wird die Genauigkeit der Tiefenkarte weiter erhöht. Des Weiteren können auch direktionale Sobel Filter genutzt werden, um eine Mehrzahl von Winkelkarten des Bereichs zu erzeugen. Dabei kann dann eine gemittelte Winkelkarte verwendet werden, um Rauschen oder Störungen zu reduzieren bzw. zu eliminieren.

In einer weiteren Ausgestaltung weist das Messgerät einen Werkstückhalter auf, wobei das Werkstück auf dem Werkstückhalter zum Vermessen angeordnet wird.

Der Werkstückhalter kann insbesondere ein Werktisch, ein Messtisch oder ein Objekttisch sein. Der Werkstückhalter ist dazu ausgebildet, das zu vermessende Werkstück während des Messprozesses in einer definierten Position zu halten. Dazu kann der Werkstückhalter beispielsweise auf der Oberseite eine ebene Fläche aufweisen, auf der das Werkstück während des Vermessens angeordnet werden kann.

In einer weiteren Ausgestaltung weist das Messgerät eine Antriebseinrichtung auf, wobei die Antriebseinrichtung den optischen Sensor relativ zu dem Werkstückhalter in der Tiefenrichtung bewegt und/oder den Werkstückhalter relativ zu dem optischen Sensor in der Tiefenrichtung bewegt, um den Abstands zwischen dem Werkstück und dem optischen Sensor zu verändern.

Mit anderen Worten ist die Antriebseinrichtung dazu ausgebildet, den Werkstückhalter und den optischen Sensor relativ zueinander zu bewegen, den Abstand zwischen dem Werkstück und dem optischen Sensor zu verändern. Dazu kann die Antriebseinrichtung entweder den Werkstückhalter in der Tiefenrichtung bewegen oder den optischen Sensor in der Tiefenrichtung bewegen oder den Werkstückhalter und den optischen Sensor in der Tiefenrichtung bewegen.

In einer weiteren Ausgestaltung wird der Abstand zwischen dem Werkstück und dem optischen Sensor in diskreten Schritten verändert.

Dabei kann Abstand schrittweise vergrößert oder verkleinert werden. Beispielsweise kann der Abstand in $50\,\mu m$ Schritten verändert werden.

In einer weiteren Ausgestaltung weist das Messgerät eine Beleuchtungseinrichtung aufweist, wobei das Verfahren des Weiteren den folgenden Schritt aufweist:

- Beleuchten des Werkstücks mittels der Beleuchtungseinrichtung während des Erfassens der Bilder des Fokalbildstapels.

Die Beleuchtungseinrichtung wird dazu verwendet, zumindest den Bereich der Oberfläche des Werkstücks auszuleuchten. Das reflektierte Licht wird dann verwendet, um ein Bild in dem optischen Sensor zu erzeugen. Auf diese Weise kann der Bereich des Werkstücks gleichmäßig ausgeleuchtet werden und die Tiefenwerte des Oberflächenbereichs mit im Wesentlichen gleicher Genauigkeit bestimmt werden. Die Beleuchtung kann beispielsweise eine koaxiale Beleuchtung, eine Ringbeleuchtung, eine Dunkelfeldbeleuchtung, eine diffuse Beleuchtung oder eine Punktquellenbeleuchtung sein. Die Beleuchtungseinrichtung kann insbesondere eine monochromatische Lichtquelle, beispielsweise ein monochromatischer Laser, sein. Eine monochromatische Lichtquelle hat den Vorteil, dass keine chromatischen Aberrationen auftreten können.

In einer weiteren Ausgestaltung weist das Verfahren des Weiteren den folgenden Schritt auf:

- Bestimmen des ersten Korrekturwerts und/oder des zweiten Korrekturwerts und/oder des dritten und vierten Korrekturwerts für jeden Punkt der Tiefenkarte, wobei vor dem Vermessen des Werkstücks eine Tiefenkarte eines Kalibrationsobjekts, insbesondere eines Punktgitters, erzeugt wird, wobei der jeweilige Korrekturwert basierend auf einer Abweichung der Tiefenkarte zu einem bekannten Oberflächenprofil des Kalibrationsobjekts bestimmt wird.

Das Kalibrationsobjekt kann auch als Kalibrationsmaske bezeichnet werden. Das Kalibrationsobjekt hat vorzugsweise runde Strukturen. Insbesondere kann das Kalibrationsobjekt ein Punktgitter oder eine Lochmaske sein. Ein Punktgitter ist eine regemäßige Anordnung von Punkten. Insbesondere ist ein Punktgitter eine geometrische Struktur, bei dem Punkte in gleichen Abständen in zwei oder drei Raumrichtungen voneinander angeordnet sind. Im Falle von zwei Raumrichtungen stehen diese senkrecht aufeinander. Im Falle von drei Raumrichtungen sind diese paarweise in einen Winkel von 60° zueinander angeordnet. Jeder Punkt des Punktgitters hat eine räumliche Ausdehnung und ist vorzugsweise kreisrund. Jeder Punkt des Punktgitters kann durch eine Mehrzahl von Bildpunkten eines erfassten Bildes abgebildet werden. Jeder Punkt weist eine ebene Oberfläche auf. Das Oberflächenprofil des Punktgitters ist somit im Voraus bereits bekannt. Insbesondere kann das Punktgitter so auf dem Werkstückhalter angeordnet werden, dass die Punkte des Punktgitters in einer horizontalen Ebene liegen. Der erste Korrekturwert kann auf Basis einer Verkippung des Abbilds des Punktgitters gegenüber einer horizontalen Ebene bestimmt werden. Der zweite Korrekturwert kann auf Basis einer Wölbung des Abbilds des Punktgitters gegenüber einer horizontalen Ebene bestimmt werden. Zur Bestimmung des dritten Korrekturwerts und des vierten Korrekturwert wird jeder Punkt des Punktgitters einzeln betrachtet. Der dritte und der vierte Korrekturwert können dann auf Basis einer Abweichung des berechneten Tiefenprofils gegenüber dem tatsächlichen Tiefenprofil des jeweiligen Punkts, das eine ebene Fläche ist, bestimmt werden. Zum Bestimmen zumindest eines der Korrekturwerte wird somit im Voraus, sprich initial, eine Tiefenkarte eines Punktgitters verwendet. Das Erzeugen der Tiefenkarte des Punktgitters erfolgt entsprechend dem Erzeugen der Tiefenkarte des Werkstücks, aber ohne den Schritt des Korrigierens der Abbildungsfehler. Jeder bestimmte Korrekturwert kann insbesondere in einer elektronischen Speichereinheit gespeichert werden. Das Messgerät kann diese Speichereinheit aufweisen. Nachdem die gewünschten Korrekturwerte bestimmt sind, kann dann das Werkstück vermessen werden. Dabei können die Tiefenwerte der Tiefenkarte mittels der bestimmten Korrekturwerte korrigiert werden. Auf diese Weise können die Korrekturwerte einfach bestimmt werden.

In einer weiteren Ausgestaltung weist das Bestimmen der ersten Korrekturwerte die folgenden Schritte auf:

- Erzeugen einer ersten Punktwolke aller Punkte des Punktgitters basierend auf Mittelwerten der Tiefenwerte jedes einzelnen Punkts des Punktgitters;

- Einpassen einer Ebene durch die erste Punktwolke; und

- Bestimmen der ersten Korrekturwerte basierend auf einem Kippwinkel einer Normalen der Ebene gegenüber der Tiefenrichtung.

Wie zuvor bereits beschrieben, wird jeder Punkt des Punktgitters mittels einer Mehrzahl von Bildpunkten eines erfassten Bildes abgebildet. Die Tiefenwerte jedes einzelnen Punkts können nach dem Erzeugen der Tiefenkarte des Punktgitters segmentiert werden. Dabei werden zunächst die Punkte der Tiefenkarte bestimmt, die jeweils einem Punkt des Punktgitters zugeordnet sind und diesen abbilden. Dann werden die entsprechenden Tiefenwerte gemittelt, um einen gemittelten Tiefenwert für jeden Punkt des Punktgitters zu bestimmen. Durch das Mitteln der Tiefenwerte wird der Einfluss eines Astigmatismus-Fehlers auf die Tiefenwerte entfernt. Die gemittelten Tiefenwerte werden dann verwendet um die erste Punktwolke zu erzeugen. Dann wird eine Ebene durch die erste Punktwolke eingepasst. Von dieser Ebene kann eine Normale bestimmt werden. Der Kippwinkel entspricht einem Winkel zwischen der Normalen und der Tiefenrichtung. Für jeden Punkt der Tiefenkarte wird dann der erste Korrekturwert auf Basis des Kippwinkels bestimmt. Insbesondere werden die ersten Korrekturwerte derart bestimmt, dass sie eine Drehung der Tiefenkarte um ihren Mittelpunkt entgegen dem Kippwinkel bewirken, wobei der Betrag des Drehwinkels der Drehung dem Betrag des Kippwinkels entspricht. Die ersten Korrekturwerte korrigieren somit den die Verkippung der Abbildung eines Objekts mittels des optischen Sensors.

In einer weiteren Ausgestaltung weist das Bestimmen der zweiten Korrekturwerte die folgenden Schritte auf:

- Erzeugen einer zweiten Punktwolke aller Punkte des Punktgitters basierenden auf Mittelwerten der Tiefenwerte jedes einzelnen Punkts des Punktgitters;

- Einpassen einer gewölbten Funktion an die zweite Punktwolke; und

- Bestimmen der zweiten Korrekturwerte basierend auf einer Wölbung der gewölbten Funktion.

Wie zuvor bereits beschrieben, wird jeder Punkt des Punktgitters mittels einer Mehrzahl von Bildpunkten eines erfassten Bildes abgebildet. Die Tiefenwerte jedes einzelnen Punkts können nach dem Erzeugen der Tiefenkarte des Punktgitters segmentiert werden. Dabei werden zunächst die Punkte der Tiefenkarte bestimmt, die jeweils einem Punkt des Punktgitters zugeordnet sind und diesen abbilden. Dann werden die entsprechenden Tiefenwerte gemittelt, um einen gemittelten Tiefenwert für jeden Punkt des Punktgitters zu bestimmen. Durch das Mitteln der Tiefenwerte wird der Einfluss eines Astigmatismus-Fehlers auf die Tiefenwerte entfernt. Die gemittelten Tiefenwerte werden dann verwendet um die zweite Punktwolke zu erzeugen. Dann wird eine gewölbte Funktion durch die zweite Punktwolke eingepasst. Die gewölbte Funktion kann eine konvexe oder eine konkave Funktion sein. Die gewölbte Funktion ist vorzugsweise eine polynomische Funktion, bei der die Tiefenwerte als Funktion der X-Werte in X-Richtung und Y-Werte in Y-Richtung definiert sind. Die gewölbte Funktion hat vorzugsweise in der Mitte des erfassten Bereichs, insbesondere im Mittelpunkt der Tiefenkarte, ein Extremum, insbesondere ein Maximum. Mit anderen Worten wöbt sich die Funktion ausgehend von dem Mittelpunkt nach außen. Von dieser Funktion kann dann die Wölbung bestimmt werden. Für jeden Punkt der Tiefenkarte wird dann der zweite Korrekturwert auf Basis der Wölbung bestimmt. Insbesondere werden die zweiten Korrekturwerte derart bestimmt, dass sie eine Wölbung der Tiefenkarte um ihren Mittelpunkt kompensieren. Die zweiten Korrekturwerte korrigieren somit die Wölbung der Abbildung eines Objekts mittels des optischen Sensors.

Insbesondere können vor der Bestimmung der zweiten Korrekturwerte die Tiefenwerte der Tiefenkarte mittels der ersten Korrekturwerte korrigiert werden, um die Verkippung vor dem Bestimmen des zweiten Korrekturwerts herauszurechnen. Die gemittelten Tiefenwerte, die zur Erzeugung der zweiten Punktwolke dienen, können dann basierend auf den korrigierten Tiefenwerten der entsprechenden Punkte des Punktgitters bestimmt werden.

In einer weiteren Ausgestaltung weist das Bestimmen der dritten und vierten Korrekturwerte die folgenden Schritte auf:

- Bestimmen des dritten Korrekturwerts und des vierten Korrekturwerts für jeden Punkt des Punktgitters basierend auf einer Kostenfunktion zwischen einem Astigmatismus-Modell und den Tiefenwerten des jeweiligen Punkts; und

- Interpolieren der dritten und vierten Korrekturwerte basierend auf den dritten und vierten Korrekturwerten jedes Punkts des Punktgitters.

Wie zuvor bereits beschrieben, wird jeder Punkt des Punktgitters mittels einer Mehrzahl von Bildpunkten eines erfassten Bildes abgebildet. Die Tiefenwerte jedes einzelnen Punkts können nach dem Erzeugen der Tiefenkarte des Punktgitters segmentiert werden. Dabei werden zunächst die Punkte der Tiefenkarte bestimmt, die jeweils einem Punkt des Punktgitters zugeordnet sind und diesen abbilden. Wie zuvor bereits beschrieben ist das Astigmatismus-Modell eine Anpassung der über den Kreisazimuth dargestellten Tiefenkartenabweichung. Die angepasste Fitfunktion, beschrieben durch die Fit-Parameter, entsprechen dem dritten Korrekturwert und dem vierten Korrekturwert des jeweiligen Punkts des Punktgitters. Insbesondere kann das Astigmatismus-Modell eine Linearkombination aus zwei radial-symmetrischen Sinus-Funktionen sein. Die Kostenfunktion wird dann nach den Koeffizienten der Sinus-Funktionen minimiert. Die Koeffizienten der Sinus-Funktionen entsprechen dem dritten Korrekturwert und dem vierten Korrekturwert des jeweiligen Punkts des Punktgitters. Ausgehend von den bestimmten dritten und vierten Korrekturwerten für jeden Punkt des Punktgitters werden die dritten und vierten Korrekturwerte für jeden Punkt der Tiefenkarte durch Interpolation basierend auf den dritten und vierten Korrekturwerten jedes Punkts des Punktgitters bestimmt.

Insbesondere können vor dem Bestimmen der dritten und vierten Korrekturwerte die Tiefenwerte der Tiefenkarte mittels der ersten und zweiten Korrekturwerte korrigiert werden, um vor der Bestimmung der der dritten und vierten Korrekturwerte einen Kippfehler und einen Bildfeldwölbungs-Fehler herauszurechnen. Der verbleibende Fehler in den korrigierten Tiefenwerten entspricht dann weitestgehend dem Astigmatismus-Fehler. Basierend auf den korrigierten Tiefenwerten der entsprechenden Punkte des Punktgitters kann dann für jeden Punkt des Punktgitters ein dritter und vierter Korrekturwert bestimmt werden.

In einer weiteren Ausgestaltung wobei das Verfahren des Weiteren den folgenden Schritt aufweist:

- Ausgeben der Tiefenkarte mittels einer Ausgabeeinrichtung.

Die Ausgabeeinrichtung kann beispielsweise ein Display aufweisen, wobei die Tiefenkarte auf dem Display dargestellt werden kann. Des Weiteren kann die Ausgabeeinrichtung dazu ausgebildet sein, die Tiefenkarte an eine elektronische Speichereinrichtung, an eine weitere Vorrichtung oder an ein externes Display auszugeben. Die elektronische Speichereinrichtung kann beispielsweise eine Speichermedium, insbesondere eine Festplatte, ein Flash-Speicher oder eine Cloud sein. Die weitere Vorrichtung kann beispielsweise die Tiefenkarte verwenden, um weitere Prozesse durchzuführen. Das externe Display kann beispielsweise dazu ausgebildet sein, die Tiefenkarte darzustellen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1    eine schematische Ansicht eines Messgeräts;

Fig. 2       eine schematische Ansicht eines Verfahrens zum Erzeugen einer Tiefenkarte eines Bereichs einer Oberfläche eines Werkstücks;

Fig. 3       eine schematische Ansicht eines Verfahrens zum Vermessen einer Oberfläche eines Werkstücks;

Fig. 4       eine schematische Ansicht von Verfahrensschritten zur Bestimmung von Korrekturwerten;

Fig. 5       eine Ansicht eines Diagramms zur Darstellung des Einpassens einer Funktion an bestimmte Fokuswerte entlang der Tiefenrichtung;

Fig. 6       eine beispielhafte Ansicht eines Kalibrationsobjekts;

Fig. 7       Ansichten von segmentierten Tiefenwerten von Punkten des Punktgitters;

Fig. 8       eine Ansicht eines Diagramms einer ersten Punktwolke;

Fig. 9       eine Ansicht eines Diagramms einer eingepassten Ebene an die erste Punktwolke;

Fig. 10      eine Ansicht eines Diagramms einer zweiten Punktwolke;

Fig. 11      eine Ansicht einer eingepassten, gewölbten Funktion an die zweite Punktwolke;

Fig. 12      eine beispielhafte Ansicht zur Darstellung von Astigmatismus;

Fig.        13 verschiedene Ansichten von Punkten des Punktgitters zur Veranschaulichung der Schritte des Bestimmens der Korrekturwerte;

Fig. 14      eine Ansicht einer USAF-Auflösungstesttafel;

Fig. 15      eine erste Ansicht einer Tiefenkarte einer USAF-Auflösungstesttafel;

Fig. 16      eine Ansicht einer Darstellung der Bildgradienten der USAF-Auflösungstesttafel;

Fig. 17      eine Ansicht einer Darstellung einer Winkelkarte der USAF-Auflösungstesttafel;

Fig. 18      eine erste Ansicht einer korrigierten Winkelkarte der USAF-Auflösungstesttafel;

Fig. 19      eine zweite Ansicht der Tiefenkarte einer USAF-Auflösungstesttafel; und

Fig. 20      eine zweite Ansicht einer korrigierten Winkelkarte der USAF-Auflösungstesttafel.

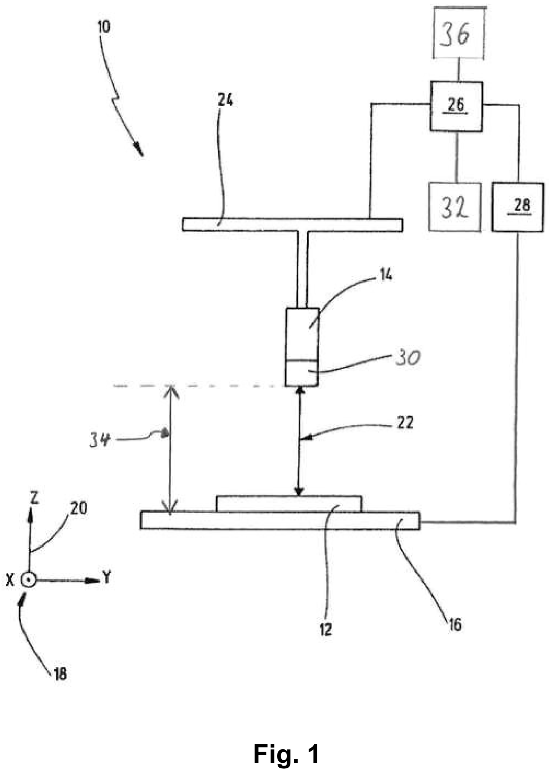

Fig. 1 zeigt ein Messgerät 10. Das Messgerät kann ein Mikroskop oder ein Koordinatenmessgerät sein. Das Messgerät 10 dient zum Vermessen eines Werkstücks 12. Hierzu weist das Messgerät 10 einen optischen Sensor 14 auf. In Ergänzung zu dem optischen Sensor 14 können selbstverständlich noch weitere Sensoren vorgesehen sein, beispielsweise taktile Sensoren, die jedoch in der vorliegenden schematischen Ansicht nicht dargestellt sind.

Der optische Sensor 14 kann ein optisches System 30 und einen Bildsensor aufweisen. Das optische System 30 bildet einen Bereich der Oberfläche des Werkstücks 12 auf den Bildsensor ab. Der optische Sensor 14 kann mittels des Bildsensors ein Bild des Bereichs der Oberfläche des Werkstücks 12 erfassen.

Des Weiteren kann das Messgerät 10 eine Beleuchtungseinrichtung 32 aufweisen. Die Beleuchtungseinrichtung ist dazu ausgebildet, das zumindest den Bereich der Oberfläche des Werkstücks 12 zu beleuchten.

Das zu vermessende Werkstück 12 ist auf einem Werkstückhalter 16 angeordnet. Der Werkstückhalter 16 kann ein Messtisch, ein Werktisch oder ein Objekttisch sein. In der dargestellten Ansicht ist der Werkstückhalter 16 in einer X-Y-Ebene eines Koordinatensystems 18 ausgerichtet. Senkrecht zu dem Werkstückhalter 16 erstreckt sich eine Z-Richtung 20. Die Z-Richtung 20 ist eine Tiefenrichtung. Ein Abstand zwischen dem optischen Sensor 14 und dem Werkstück 12 in der Tiefenrichtung 20 ist mit einem Bezugszeichen 22 gekennzeichnet. Ein Abstand zwischen dem optischen Sensor 14 und dem Werkstückhalter 16 in der Tiefenrichtung 20 ist mit einem Bezugszeichen 34 gekennzeichnet. Der optische Sensor 14 und der Werkstückhalter 16 sind relativ zueinander bewegbar. Auf diese Weise kann der Abstand 34 verändert werden. Da das Werkstück 12 auf dem Werkstückhalter 16 angeordnet ist, ändert sich der Abstand 22 entsprechend dem Abstand 34. Grundsätzlich kann hierzu vorgesehen sein, dass der Werkstückhalter 16 in der Tiefenrichtung 20 bewegbar ist und/oder der optische Sensor 14, beispielsweise mittels einer geeigneten Mechanik 24, in der Tiefenrichtung 20 bewegbar ist.

Das Messgerät 10 kann des Weiteren eine Antriebseinrichtung 28 aufweisen. Die Antriebseinrichtung 28 ist dazu ausgebildet, den Werkstückhalter 16 und den optischen Sensor 14 relativ zueinander in der Tiefenrichtung 20 zu bewegen. Vorzugsweise ist die Antriebseinrichtung 28 dazu ausgebildet, den Werkstückhalter 16 relativ zu dem optischen Sensor 14 in der Tiefenrichtung 20 zu bewegen. Alternativ kann die Antriebseinrichtung 28 auch dazu ausgebildet sein, den optischen Sensor 14 relativ zu dem Werkstückhalter 16 in der Tiefenrichtung 20 zu bewegen. Selbstverständlich kann die Antriebseinrichtung 28 auch dazu ausgebildet sein, sowohl den optische Sensor 14 als auch den Werkstückhalter 16 in der Tiefenrichtung 20 zu bewegen.

Das Messgerät 10 weist des Weiteren eine Steuereinrichtung 26 auf. Die Steuereinrichtung 26 ist dazu eingerichtet, die einzelnen Komponenten des Messgeräts zu steuern und Daten zu verarbeiten. Die Steuereinrichtung 26 kann dazu beispielsweise verschiedene Untereinheiten aufweisen, die jeweils eine Steuerung einer Komponente und/oder eine Verarbeitung von Daten durchführen. Beispielsweise kann die Steuereinrichtung 26 eine Regelungseinheit aufweisen, die die Antriebseinrichtung 28, den optischen Sensor 14 und/oder die Beleuchtungseinrichtung 32 steuert. Des Weiteren kann die Steuereinrichtung 26 eine Datenverarbeitungseinheit aufweisen, die dazu eingerichtet ist, die Auswertung von erfassten Bildern des optischen Sensors durchzuführen. Die Datenverarbeitungseinheit kann beispielsweise auf Basis einer Mehrzahl von Bildern, die einen Fokalbildstapel bilden, eine Tiefenkarte und/oder ein EDOF Bild des Werkstücks 12 erzeugen.

Die Steuereinrichtung 26 kann mit einem nichtflüchtigen Datenspeicher, in dem ein Computerprogramm gespeichert ist, verbunden sein oder diesen aufweisen. Bei manchen Ausführungsbeispielen ist die Steuereinrichtung 26 ein Mehrzweckcomputer, wie etwa ein handelsüblicher Personal Computer, der unter Windows®, Linux oder MacOS läuft, und das Computerprogramm aus dem Speicher weist einen Programmcode auf, der zum Implementieren von Ausführungsformen des neuen Verfahrens in Kombination dem optischen Sensor 14 und der Antriebseinrichtung 28 gestaltet und ausgebildet ist. Bei einem alternativen Ausführungsbeispiel ist die Steuereinrichtung 26 ein logischer Schaltkreis, wie etwa ein vor Ort programmierbares Gate-Array (FPGA: Field Programmable Gate Array), ein anwendungsspezifischer integrierter Schaltkreis (ASIC: Application-Specific Integrated Circuit), ein Mikrocontroller oder ein beliebiger anderer angemessener programmierbarer elektrischer Schaltkreis. Darin können die Ausführungsformen des neuen Verfahrens, insbesondere Steuer- und Bestimmungsschritte, mit dem logischen Schaltkreis implementiert werden, sodass der logische Schaltkreis zum Implementieren von Ausführungsformen des neuen Verfahrens in Kombination mit dem optischen Sensor 14 und der Antriebseinrichtung 28 gestaltet und ausgebildet ist. Zum Implementieren von Ausführungsformen des neuen Verfahrens in dem logischen Schaltkreis kann eine beliebige angemessene Programmiersprache oder Hardwarebeschreibungssprache verwendet werden, wie etwa C, VHDL und dergleichen.

Des Weiteren kann das Messgerät 10 eine Ausgabeeinrichtung 36 aufweisen. Die Ausgabeeinrichtung 36 ist dazu eingerichtet, die Tiefenkarte und/oder das EDOF Bild des Werkstücks 12 auszugeben. Die Ausgabeeinrichtung 36 kann beispielsweise ein Display aufweisen, auf dem die Tiefenkarte und/oder das EDOF Bild des Werkstücks 12 dargestellt werden kann. Alternativ oder zusätzlich kann die Ausgabeeinrichtung 36 dazu ausgebildet sein, die Tiefenkarte und/oder das EDOF Bild des Werkstücks 12 an eine elektronische Speichereinrichtung, an eine weitere Vorrichtung oder an ein externes Display auszugeben.

Darüber hinaus kann das Messgerät 10 auch ein Eingabegerät aufweisen, mit dem ein Nutzer beispielsweise die Anzahl und Abstände bzw. Schrittweite der zu erfassenden Bilder in das Koordinatenmessgerät 10 eingeben kann oder den optischen Sensor 14 manuell bewegen kann.

Bevor das Werkstück vermessen wird, kann vorgesehen sein, dass ein Nutzer die Anzahl der zu erfassenden Bilder sowie die Schrittweite oder Abstände 22, in der die Bilder erfasst werden sollen, eingibt. Alternativ kann die Anzahl der zu erfassenden Bilder sowie die Schrittweite oder Abstände 22, in der die Bilder erfasst werden sollen, vordefiniert bzw. fest vorgegeben sein. Zum Vermessen des Werkstücks 12 steuert die Steuereinrichtung 26 dann die Antriebseinrichtung 28 derart, dass der Abstand 22 zwischen dem Werkstück 12 und dem optischen Sensor 14 entsprechend der Voreinstellung verändert wird. Gleichzeitig steuert die Steuereinrichtung 26 den optischen Sensor 14 derart, dass eine Mehrzahl von Bildern des Bereichs der Oberfläche des Werkstücks 12 entsprechend der Voreinstellung erfasst wird, während der Abstand 22 verändert wird. Jedes Bild wird dabei mit einem anderen Abstand 22 zu dem Werkstück 12 erfasst. Die Mehrzahl von Bildern bildet dann einen Fokalbildstapel. Der Fokalbildstapel wird dann von der Steuereinrichtung 26 ausgewertet, um die Tiefenkarte des Bereichs der Oberfläche des Werkstücks 12 zu erzeugen. Auf Basis der Tiefenkarte und den Bildern des Fokalbildstapels kann ein EDOF Bild erzeugt werden.

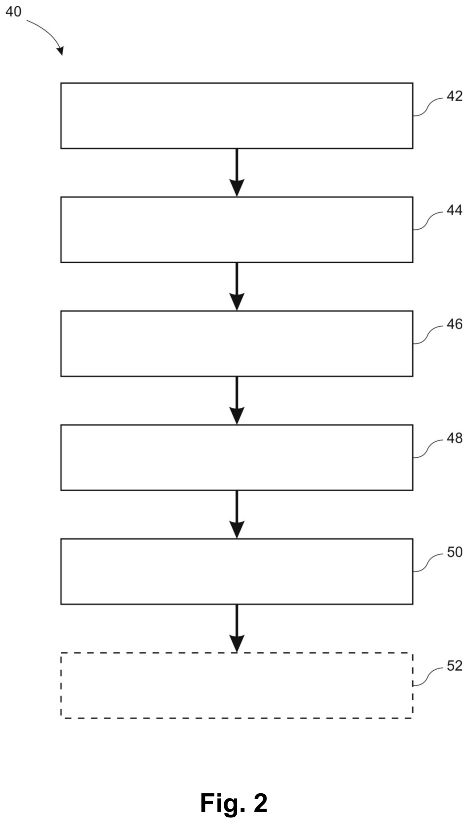

Fig. 2 zeigt ein computerimplementiertes Verfahren 40 zum Erzeugen einer Tiefenkarte eines Bereichs einer Oberfläche des Werkstücks 12. Das Verfahren kann beispielsweise mittels der Steuereinrichtung 26 durchgeführt werden.

In einem ersten Schritt 42 des Verfahrens 40 wird ein Fokalbildstapel empfangen. Der Fokalbildstapel weist eine Mehrzahl von Bildern des Werkstücks 12 auf, wobei die Bilder den Bereich der Oberfläche des Werkstücks 12 mit in einer Tiefenrichtung unterschiedlichen, definierten Fokalebenenpositionen abbilden, wobei jedem Bild des Fokalbildstapels eine Fokalebenenposition zugeordnet ist. Jedes Bild weist Bildpunkte auf. Die Bildpunkte der Bilder sind jeweils einem entsprechendem Objektpunkt auf der Oberfläche des Werkstücks 12 zugeordnet.

Vorzugsweise bilden die Bilder jeweils den Bereich der Oberfläche des Werkstücks 12 aus unterschiedlichen, definierten Abständen 22 zu dem Werkstück 12 in der Tiefenrichtung 20 ab. Jedem Bild des Fokalbildstapels ist dabei ein Abstand 22 zugeordnet. Da die Bilder in unterschiedlichen Abständen 22 zu dem Werkstück 12 in der Tiefenrichtung 20 erfasst werden, ist jedem Bild des Fokalbildstapels ein Tiefenwert in der Tiefenrichtung 20 zugeordnet. Insbesondere folgen die Tiefenwerte der Bilder in diskreten Schritten aufeinander.

Alternativ bilden die Bilder jeweils den Bereich der Oberfläche des Werkstücks 12 mit unterschiedlichen, definierten Fokusstellungen, sprich unterschiedlichen Fokalbildebenen, ab. Dabei kann jeder Fokusstellung bzw. Einstellung des Fokusabstands des Objektivs des optischen Sensors ein Tiefenwert in der Tiefenrichtung 20 zugeordnet sein, der dem Abstand zu der Fokalebene in der jeweiligen Fokusstellung bzw. Einstellung entspricht. Der Abstand des optischen Sensors 14 zu dem Werkstück 12 kann dabei konstant bleiben.

In einem weiteren Schritt 44 des Verfahrens 40 wird ein Fokuswert jedes Bildpunkts jedes Bildes des Fokalbildstapels bestimmt. Die Fokuswerte der Bildpunkte werden auf Basis einer Schärfe jedes Bildpunkts bestimmt. Dazu wird für jeden Bildpunkt ein Gradient der Helligkeit, eines Grau-Werts oder eines Kontrastwerts zu den umgebenden Bildpunkten des entsprechenden Bildes bestimmt. Auf diese Weise ist jedem Bildpunkt jedes Bildes aus dem Fokalbildstapel ein Fokuswert zugeordnet. Da jedem Bild ein Tiefenwert in der Tiefenrichtung 20 zugeordnet ist, ist entsprechend jedem Bildpunkt des jeweiligen Bildes auch derselbe Tiefenwert zugeordnet. Mit anderen Worten sind jedem Bildpunkt ein Tiefenwert und ein Fokuswert zugeordnet.

In einem weiteren Schritt 46 des Verfahrens 40 wird eine Funktion entlang der Tiefenrichtung 20 an die Fokuswerte derjenigen Bildpunkte der Bilder eingepasst, die demselben Objektpunkt zugeordnet sind. Die Funktion beschreibt eine Zuordnung bei der jedem Tiefenwert in der Tiefenrichtung ein entsprechender Fokuswert zugeordnet ist. Vorzugsweise ist die Funktion eine Gauß-Funktion. Alternativ können auch andere Funktionen wie beispielsweise eine parabolische Funktion zum Einpassen verwendet werden. Vorzugsweise ist die Funktion achsensymmetrisch bezüglich eines Extremums, insbesondere bezüglich eines Maximums.

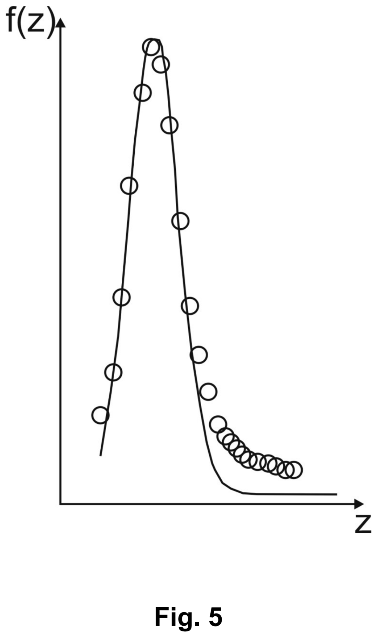

In Fig. 5 ist exemplarisch ein Graph dargestellt, in dem die Fokuswerte von Bildpunkten eines Objektpunkts entlang der Tiefenrichtung 20, sprich der Z-Richtung, aufgetragen sind und eine Fit-Funktion, vorzugsweise eine Gauß-Funktion, an diese Fokuswerte eingepasst ist.

Grundsätzlich lässt sich die einzupassende Gauß-Funktion durch die Gleichung (1) darstellen.

$$f(z) = k \, exp \frac{-(z-\mu)^2}{2\sigma^2} \qquad (1)$$

Hierbei ist k die Amplitude, $\mu$ der Erwartungswert und $\sigma$ die Standardabweichung der Gauß-Funktion. z ist ein Tiefenwert in der Tiefenrichtung 20, die der Z-Richtung entspricht. f(z) stellt somit den entsprechenden Fokuswert zu dem jeweiligen Tiefenwert dar.

Der natürliche Logarithmus von Gleichung (1) ist in Gleichung (2) dargestellt. Gleichung (2) lässt sich in linearisierter Form mittels linearisierter Parameter a, b und c darstellen. Die linearisierte Form ist in Gleichung (3) dargestellt.

In

$$f(z) = \ln k + \frac{-(z-\mu)^2}{2\sigma^2} \qquad (2)$$

In

$$f(z) = a + bz + cz^2 \qquad (3)$$

Die Abhängigkeiten der linearisierten Parameter a, b und c von dem Erwartungswert $\mu$, der Standardabweichung $\sigma$ und der Amplitude k sind in den Gleichungen (4) - (6) definiert.

$$a = \ln k - \frac{\mu^2}{2\sigma^2} \qquad (4)$$

$$b = \frac{\mu}{\sigma^2} \qquad (5)$$

$$c = -\frac{1}{2\sigma^2} \qquad (6)$$

Zur Bestimmung der Parameter a, b, c ausgehend von der linearisierten Gleichung auf Basis der Tiefenwerte z und Fokuswerte f(z) der Bildpunkte des jeweiligen Objektpunkts wird die Methode der kleinsten Quadrate angewandt. Daraus ergibt sich das lineare Gleichungssystem der Gleichung (7) mit den Variablen A, x und B, die in den Gleichungen (8) - (10) definiert sind.

$$Ax = B \qquad (7)$$

$$A = \begin{bmatrix} N & \sum z & \sum z^2 \\ \sum z & \sum z^2 & \sum z^3 \\ \sum z^2 & \sum z^3 & \sum z^4 \end{bmatrix} \qquad (8)$$

$$B = \begin{bmatrix} \sum \ln f(z) \\ \sum z \ln f(z) \\ \sum z^2 \ln f(z) \end{bmatrix} \qquad (9)$$

$$x = \begin{bmatrix} a \\ b \\ c \end{bmatrix} \qquad (10)$$

x ist ein Vektor, der die linearisierten Parameter a, b, c der Gauß-Kurve aufweist. A ist eine 3x3 Matrix, die die Koeffizienten des Gleichungssystems angibt. B ist ein Vektor, der die Lösungen des Gleichungssystems aufweist. N ist die Anzahl der Bildpunkte, an die die Funktion eingepasst wird. Diese Anzahl entspricht der Anzahl der Bilder. Die z-Werte sind die Tiefenwerte dieser Bildpunkte. Wie zuvor bereits beschrieben, entspricht der Tiefenwert eines Bildpunkts eines Bildes dem Tiefenwert des Bildes. Die Funktionswerte f(z) sind die Fokuswerte dieser Bildpunkte. Das Summenzeichen in der Matrix A und dem Vektor B bedeutet, dass über alle Bildpunkte summiert wird.

Die Matrix A hängt somit nur von den Tiefenwerten z der Bilder des Fokalbildstapels sowie von der Anzahl N der Bilder des Fokalbildstapels ab. Die Matrix A ist somit für jeden Objektpunkt des Bereichs der Oberfläche des Werkstücks 12 gleich. Lediglich der Lösungsvektor B unterscheidet sich von Objektpunkt zu Objektpunkt, da der Lösungsvektor B zusätzlich auch von den jeweiligen Fokuswerten f(z) der entsprechenden Bildpunkte abhängt.

Die linearisierten Parameter a, b und c der Gauß-Funktion lassen sich über das Gleichungssystem der Gleichung (7) bestimmen.

Der Erwartungswert μ, die Standardabweichung σ und die Amplitude k der Gauß-Funktion lassen sich dann mittels der Gleichungen (11) - (13) auf Basis der linearisierten Parameter bestimmen.

$$\mu = \frac{-b}{2c} \qquad (11)$$

$$\sigma = \sqrt{\frac{-1}{2c}} \qquad (12)$$

$$k = \exp\left(a - \frac{b^2}{4c}\right) \qquad (13)$$

Durch Bildung der Inversen der Matrix A können die linearisierten Parameter a, b und c mittels der Gleichung (14) bestimmt werden.

$$x = A^{-1}B \qquad (14)$$

Wie eingangs bereits beschrieben, haben derzeitige optische Sensoren Auflösungen von mehreren Megapixel, wobei die Anzahl der Bildpunkte jedes erfassten Bildes und entsprechend auch die Anzahl der abgebildeten Objektpunkte der Anzahl der Pixel des optischen Sensors entspricht. Daraus ergeben sich mehrere Millionen Bildpunkte bzw. Objektpunkte. Die Anzahl der abgebildeten Objektpunkte wird im Folgenden mit M bezeichnet. Da das Einpassen einer Gauß-Funktion für jeden Objektpunkt durchgeführt wird, ist dies eine rechenintensive Aufgabe.

Zur Vereinfachung der Berechnung kann eine schwachbesetzte Blockmatrix erzeugt werden, die eine 3Mx3M Matrix ist. Die Blockmatrix $A_{Block}$ ist in Gleichung (15) definiert.

$$A_{Block} = \begin{bmatrix} A_{1,1} & \cdots & 0 \\ \vdots & \ddots & \vdots \\ 0 & \cdots & A_{x,y} \end{bmatrix} = \begin{bmatrix} A_1 & \cdots & 0 \\ \vdots & \ddots & \vdots \\ 0 & \cdots & A_M \end{bmatrix} \qquad (15)$$

Jeder 3x3 Block entlang der Diagonalen enthält eine 3x3 Matrix A, die das lineare Gleichungssystem für jeweils einen Objektpunkt beschreibt. Durch einmaliges Invertieren der Blockmatrix $A_{Block}$ kann man die Gauß-Parameter für jeden Objektpunkt des Bereichs der Oberfläche des Werkstücks 12 in recheneffizienter Weise bestimmt werden.

In einem weiteren Schritt 48 des Verfahrens 40 wird der Tiefenwert jedes Objektpunkts auf der Oberfläche des Werkstücks 12 in der Tiefenrichtung 20 basierend auf einem Extremum, insbesondere einem Maximum, der eingepassten Funktion bestimmt. Wenn die einzupassende Funktion eine Gauß-Funktion ist, entspricht der Tiefenwert jedes Objektpunkts dem Erwartungswert $\mu$ der jeweiligen Gauß-Funktion. Die linearisierten Parameter können dann mittels der Gleichung (14) bestimmt werden, wobei der Tiefenwert des Objektpunkts dann mittels der Gleichung (11) bestimmt wird.

Das Einpassen einer Funktion wird für jeden Objektpunkt wiederholt, so dass für jeden Objektpunkt ein entsprechender Tiefenwert auf Basis des Extremums, insbesondere des Maximums, der jeweiligen Funktion bestimmt werden kann.

In einem weiteren Schritt 50 des Verfahrens 40 wird eine Tiefenkarte des Bereichs der Oberfläche des Werkstücks 12 basierend auf den bestimmten Tiefenwerten jedes Objektpunkts erzeugt. Auf Basis der erzeugten Tiefenkarte und der Bilder des Fokalbildstapels kann dann ein EDOF Bild erzeugt werden.

In einem weiteren, optionalen Schritt 52 des Verfahrens 40 wird mindestens ein Abbildungsfehler der Bilder des Fokalbildstapels in der Tiefenkarte korrigiert. Beispielsweise können ein Kippfehler, ein Bildfeldwölbung-Fehler und ein Astigmatismus-Fehler korrigiert werden. Dazu werden die Tiefenwerte der Tiefenkarte vor dem Erzeugen 50 der Tiefenkarte oder nach dem erzeugen der Tiefenkarte korrigiert.

Zum Korrigieren des Kippfehlers ist jedem Punkt der Tiefenkarte ein erster Korrekturwert zugeordnet, wobei der Tiefenwert jedes Punkts der Tiefenkarte mittels des entsprechenden ersten Korrekturwerts korrigiert wird. Die Korrektur des jeweiligen Tiefenwerts erfolgt durch Subtraktion des entsprechenden ersten Korrekturwerts von dem jeweiligen Tiefenwert. Der erste Korrekturwert kann vorberechnet oder vorbestimmt sein.

Zum Korrigieren des Bildfeldwölbung-Fehlers ist jedem Punkt der Tiefenkarte ein zweiter Korrekturwert zugeordnet, wobei der Tiefenwert jedes Punkts der Tiefenkarte mittels des entsprechenden zweiten Korrekturwerts korrigiert wird. Die Korrektur des jeweiligen Tiefenwerts erfolgt durch Subtraktion des entsprechenden zweiten Korrekturwerts von dem jeweiligen Tiefenwert. Der zweite Korrekturwert kann vorberechnet oder vorbestimmt sein.

Die Korrektur des Astigmatismus-Fehlers ist komplexer als die Korrektur des Kippfehlers und des Bildfeldwölbung-Fehlers und lässt sich nicht einfach durch Subtraktion eines einzigen Korrekturwerts durchführen. Dies liegt daran, dass Astigmatismus von der Kantenrichtung abhängt. Mit anderen Worten ist der Astigmatismus-Fehler winkelabhängig. Dies erfordert, dass für den Bereich der Oberfläche des Werkstücks 12 eine Winkelkarte bestimmt werden muss, auf Basis derer der Astigmatismus-Fehler korrigiert werden kann.

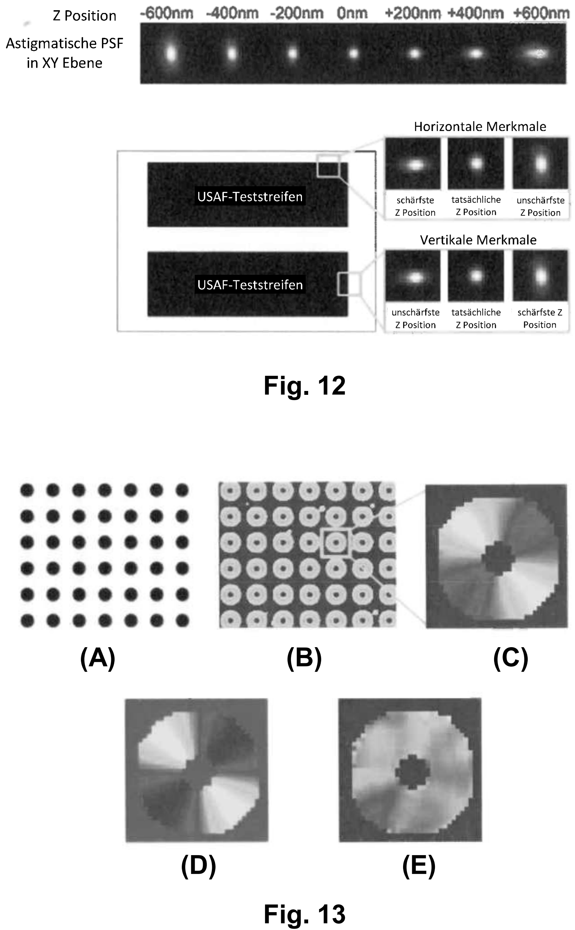

Zur Veranschaulichung der Winkelabhängigkeit wird im Folgenden die Darstellung der Fig. 12 betrachtet. Astigmatismus ist eine Aberration der "schiefen" Strahlen. Ein schief einfallendes Strahlenbündel wird in der Meridional- und der Sagittalebene unterschiedlich stark gebrochen. In Richtung der Meridionalebene, auch Transversalebene genannt, ist eine Linse perspektivisch verkürzt, woraus eine kürzere Brennweite resultiert als in der Sagittalebene. Daher haben sagittale und transversale Strahlen in unterschiedlichen Abständen entlang der optischen Achse, sprich in der Tiefenrichtung, ihren Brennpunkt. Diese Brennpunkte werden transversaler Brennpunkt und sagittaler Brennpunkt genannt. Bei Astigmatismus wird daher ein Punkt eines Objekts, der nicht auf der optischen Achse liegt, nicht scharf abgebildet. Stattdessen werden scharfe Linien bzw. Ovale am sagittalen und transversalen Brennpunkt gebildet. Zwischen diesen zwei Brennpunkten wird ein rundes, unscharfes Bild gebildet. Kreise mit der optischen Achse als Zentrum oder Linien bzw. Kanten, die tangential zu solchen Kreisen sind, werden im transversalen Brennpunkt scharf abgebildet. Linien bzw. Kanten, die in radialer Richtung verlaufen, werden im sagittalen Brennpunkt scharf abgebildet.

Dies ist in Fig. 12 am Beispiel eines rechteckigen Teststreifens einer USAF-Auflösungstesttafel demonstriert. Die Kanten des Teststreifens verlaufen in zwei Richtungen, die senkrecht zueinander angeordnet sind. Die Bildpunkte der horizontalen Kante und der vertikalen Kante sind nicht im tatsächlichen Abstand (z-Position) zu dem Teststreifen scharf gestellt. Stattdessen ist eine Kante (im Beispiel der Fig. 12 die vertikale Kante) im einem geringeren Abstand als dem tatsächlichen Abstand scharf gestellt, wohingegen die andere Kante (im Beispiel der Fig. 12 die horizontale Kante) im einem größeren Abstand als dem tatsächlichen Abstand scharf gestellt ist. Mit anderen Worten führt Astigmatismus zu einem Versatz in der Tiefenrichtung, wobei die Richtung des Versatzes von der Ausrichtung der Kante, sprich dem Winkel abhängt.

Um den Astigmatismus-Fehler zu korrigieren, kann dieser Fehler in jedem Punkt der Tiefenkarte in zwei Anteile entsprechend zweier senkrechter Richtungen in der X-Y Ebene zerlegt werden, insbesondere in einen horizontalen Anteil und einen vertikalen Anteil. Jedem Punkt der Tiefenkarte kann dann ein dritter Korrekturwert und ein vierter Korrekturwert zugeordnet werden. Der Astigmatismus kann als Fit einer Höhenabweichung gegenüber einer azimuthal variierenden Kante modelliert werden ($z = f(\Theta)$). Insbesondere kann der Astigmatismus als Linearkombination aus zwei radial-symmetrischen Sinusfunktionen modelliert werden. Die Sinusfunktionen sind Funktionen eines Winkels in der X-Y Ebene. Vorzugsweise sind die beiden Sinusfunktionen um $\pi/2$ verschoben. Insbesondere ist die erste Sinusfunktion ein Sinus und die zweite Sinusfunktion ein Cosinus. Dabei entspricht der dritte Korrekturwert dem Koeffizienten in der ersten Sinusfunktion und der vierte Koeffizient dem Koeffizienten der zweiten Sinusfunktion. Der dritte Korrekturwert und der vierte Korrekturwert stellen somit zwei Korrekturwerte in zwei senkrecht zueinander stehenden Richtungen dar. Der Astigmatismus kann insbesondere mit der Formel $\alpha \sin \theta + \beta \cos \theta$ modelliert werden, wobei $\alpha$ der dritte Korrekturwert, $\beta$ der vierte Korrekturwert und $\theta$ ein Winkel in der X-Y Ebene ist.

Zum Korrigieren des Astigmatismus-Fehlers in der Tiefenkarte im Schritt 52 des Verfahrens 40 wird zunächst für den Bereich der Oberfläche des Werkstücks 12 eine Winkelkarte erzeugt. Zum Erzeugen der Winkelkarte wird zunächst ein EDOF Bild des erfassten Bereichs des Punkgitters betrachtet. Das EDOF Bild kann beispielsweise auf Basis der Tiefenkarte und der Bilder des Fokalbildstapels des Punktgitters erzeugt werden. In dem EDOF Bild kann dann für jeden Punkt ein Bildgradient bestimmt werden. Der Bildgradient bestimmt sich aus einer Änderung der Helligkeit zu umliegenden Bildpunkten. Die Richtung des Bildgradienten kann mittels eines Winkels dargestellt werden. Dieser Winkel gibt eine Richtung in der X-Y Ebene an. Auf diese Weise können für jeden Punkt des EDOF Bilds ein Bildgradient und ein entsprechender Winkel bestimmt werden. Die bestimmten Winkel bilden dann die Winkelkarte. Mit anderen Worten stellt die Winkelkarte für jeden Punkt der Tiefenkarte den entsprechenden Winkel des Bildgradienten dar. Des Weiteren können auch direktionale Sobel Filter genutzt werden, um eine Mehrzahl von Winkelkarten des Bereichs zu erzeugen. Dabei kann dann eine gemittelte Winkelkarte verwendet werden, um Rauschen oder Störungen zu reduzieren bzw. zu eliminieren.

Der Tiefenwert jedes Punkts der Tiefenkarte kann dann basierend auf dem dritten Korrekturwert, dem vierten Korrekturwert und der Winkelkarte korrigiert werden. Da aus der Winkelkarte für jeden Punkt der Tiefenkarte der Winkel $\theta$ bestimmt ist, kann somit für jeden Punkt der Tiefenkarte ein effektiver Korrekturwert mittels der Formel $\alpha \sin \theta + \beta \cos \theta$ berechnet werden. Die Korrektur des jeweiligen Tiefenwerts erfolgt dann durch Subtraktion des entsprechenden effektiven Korrekturwerts von dem jeweiligen Tiefenwert der Tiefenkarte.

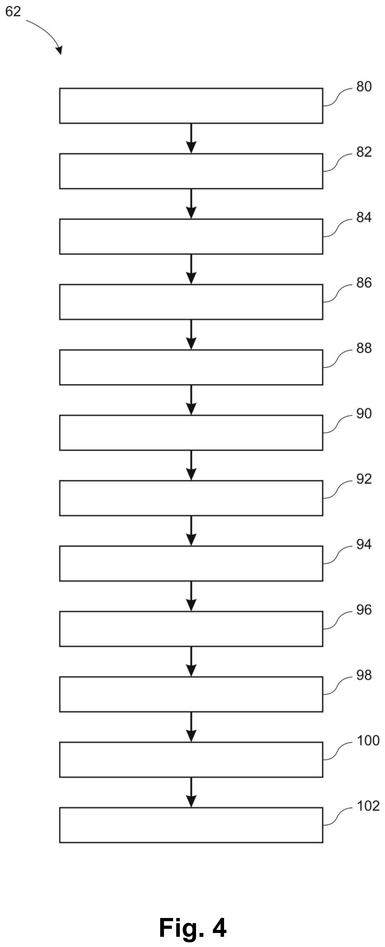

Die Korrekturwerte zum Korrigieren der jeweiligen Abbildungsfehler können wie in Fig. 4 nachfolgend beschrieben im Voraus bestimmt werden.

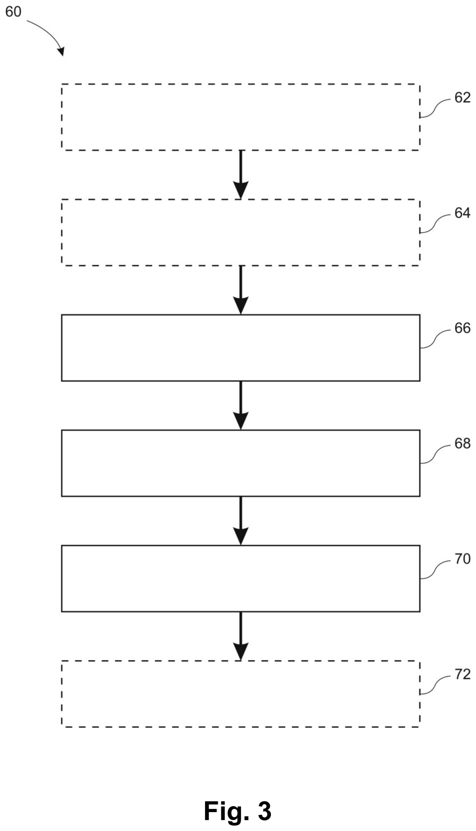

Fig. 3 zeigt ein Verfahren 60 zum Vermessen einer Oberfläche des Werkstücks 12 mit dem optischen Sensor 14 des Messgeräts 10. Das Werkstück wird zum Vermessen auf dem Werkstückhalter angeordnet. Der optische Sensor 14 kann dann einen Bereich der Oberfläche des Werkstücks 12 erfassen. Der optische Sensor 14 und das Werkstück 12 sind in einer Tiefenrichtung 20 relativ zueinander bewegbar, so dass der Abstand 22 in der Tiefenrichtung 20 zwischen dem Werkstück 12 und dem optischen Sensor 14 veränderbar ist.

In einem Schritt 66 des Verfahrens 60 wird der Abstand 22 zwischen dem Werkstück und dem optischen Sensor verändert. Dazu kann die Antriebseinrichtung den optischen Sensor 14 relativ zu dem Werkstückhalter 16 in der Tiefenrichtung 20 bewegen und/oder den Werkstückhalter 16 relativ zu dem optischen Sensor 14 in der Tiefenrichtung 20 bewegen, um den Abstand 22 zwischen dem Werkstück 16 und dem optischen Sensor 14 zu verändern. Insbesondre kann der Abstand 22 in diskreten Schritten, beispielsweise in Schritten von $50\mu$m verändert werden.

In einem weiteren Schritt 68 des Verfahrens 60 wird eine Mehrzahl von Bildern eines Bereichs der Oberfläche des Werkstücks mittels des optischen Sensors erfasst, während der Abstand 22 zwischen dem Werkstück und dem optischen Sensor verändert wird, wobei die Bilder jeweils den Bereich der Oberfläche des Werkstücks 12 aus unterschiedlichen, definierten Abständen 22 zu dem Werkstück 12 in der Tiefenrichtung 20 abbilden, wobei jeder Bildpunkt jedes Bildes einem entsprechendem Objektpunkt auf der Oberfläche des Werkstücks 12 zugeordnet ist, und wobei die erfassten Bilder einen Fokalbildstapel bilden.

In einem weiteren Schritt 70 des Verfahrens 60 wird eine Tiefenkarte des Bereichs der Oberfläche des Werkstücks 12 mittels des Verfahrens aus Fig. 2 erzeugt. Des Weiteren kann auch auf Basis der erzeugten Tiefenkarte und der Bilder des Fokalbildstapels ein EDOF Bild erzeugt werden.

In einem weiteren optionalen Schritt 72 des Verfahrens 60 wird die erzeugte Tiefenkarte mittels der Ausgabeeinrichtung 36 ausgegeben. Alternativ oder zusätzlich kann die Ausgabeeinrichtung 36 auch das erzeugte EDOF Bild ausgeben.

In einem weiteren optionalen Schritt 64 des Verfahrens 60 wird das Werkstück 12 mittels der Beleuchtungseinrichtung 32 während des Erfassens der Bilder des Fokalbildstapels beleuchtet.

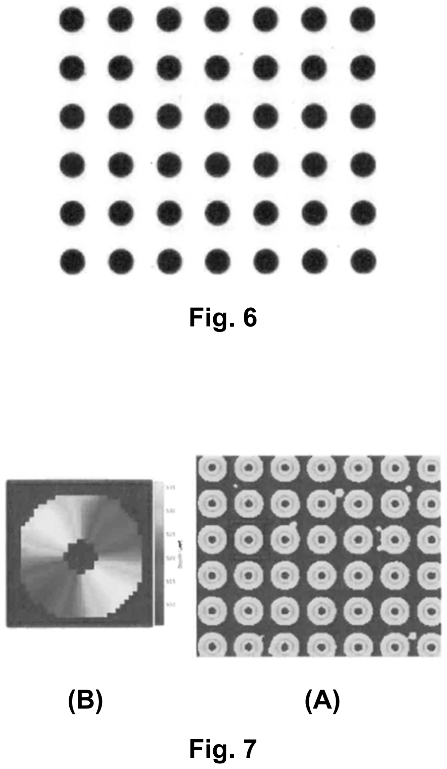

In einem weiteren optionalen Schritt 62 des Verfahrens 60 wird mindestens einer der Korrekturwerte der Abbildungsfehler bestimmt. Dazu wird vor dem Vermessen des Werkstücks, insbesondere vor den Schritten 62 bis 72, eine Tiefenkarte eines Kalibrationsobjekts, insbesondere eines Punktgitters, erzeugt. Die Tiefenkarte des Kalibrationsobjekts wird entsprechend der Schritte 62 bis 70 mit einem Kalibrationsobjekt als Werkstück erzeugt, wobei beim Erzeugen der Tiefenkarte des Kalibrationsobjekts keine Korrektur von Abbildungsfehlern vorgenommen wird. Fig. 6 zeigt eine exemplarische Darstellung eines Kalibrationsobjekts in Form eines Punktgitters. Da das Oberflächenprofil des Kalibrationsobjekts bekannt ist, wird der mindestens eine der Korrekturwerte dann basierend auf Abweichungen der Tiefenkarte zu dem bekannten Oberflächenprofil des Kalibrationsobjekts bestimmt.

Der Schritt 62 ist somit als Kalibrierungsschritt zu verstehen, bei dem systematische Messfehler des optischen Sensors bestimmt und entsprechende Korrekturwerte ermittelt werden. Zur Kalibrierung wird in diesem Fall ein Punktgitter verwendet

Fig. 4 zeigt Verfahrensschritte, mittels denen die Korrekturwerte in dem Schritt 62 des Verfahrens 60 bestimmt werden.

In einem ersten Schritt 80 wird die Tiefenkarte des Punktgitters erzeugt. Die Tiefenkarte des Punktgitters wird entsprechend der Schritte 62 bis 70 mit einem Punktgitter als Werkstück 12 erzeugt, wobei beim Erzeugen der Tiefenkarte des Punkgitters keine Korrektur von Abbildungsfehlern vorgenommen wird. Eine exemplarische Darstellung einer Tiefenkarte eines Punktgitters ist in Abbildung (A) der Fig. 7 dargestellt. Auf Basis der Tiefenkarte und des Fokalbildstapels des Punktgitters kann zusätzlich ein EDOF Bild des erfassten Bereichs der Oberfläche des Punktgitters erzeugt werden.

In einem weiteren Schritt 82 werden die Tiefenwerte jedes einzelnen Punkts des Punktgitters segmentiert. Zur Segmentierung kann eine Hough-Transformation verwendet werden, mittels der Kreise erkannt werden können. Die Hough-Transformation kann beispielsweise auf das EDOF Bild angewandt werden, um die Position der einzelnen Punkte des Punktgitters zu detektieren. Dies ist für einen Punkt des Punkgitters exemplarisch in Abbildung (B) der Fig. 7 dargestellt.

In einem weiteren Schritt 84 wird ein Mittelwert der Tiefenwerte des jeweiligen Punkts des Punktgitters bestimmt. Mit anderen Worten wird für jeden Punkt des Punktgitters ein gemittelter Tiefenwert bestimmt.

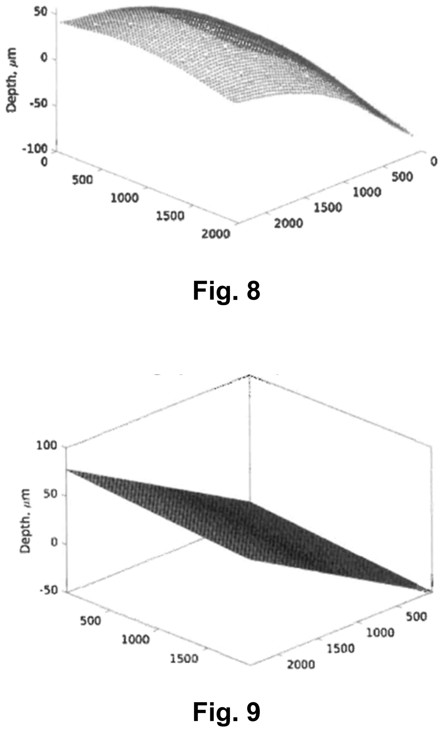

In einem weiteren Schritt 86 wird eine erste Punktwolke der Punkte des Punktgitters basierenden auf den bestimmten Mittelwerten der Tiefenwerte der Punkte des Punktgitters erzeugt. Eine exemplarische Darstellung einer ersten Punktwolke eines Punktgitters ist in Fig. 8 dargestellt.

In einem weiteren Schritt 88 wird eine Ebene an die erste Punktwolke eingepasst. Eine exemplarische Darstellung einer eingepassten Ebene an die erste Punktwolke aus Fig. 8 ist in Fig. 9 dargestellt.

In einem weiteren Schritt 90 werden die ersten Korrekturwerte basierend auf einem Kippwinkel der Normalen der Ebene gegenüber der Tiefenrichtung bestimmt. Mit anderen Worten wird jeder erste Korrekturwert basierend auf einer Abweichung der eingepassten Ebene gegenüber einer horizontalen Ebene, deren Normale senkrecht zur Tiefenrichtung ist, bestimmt.

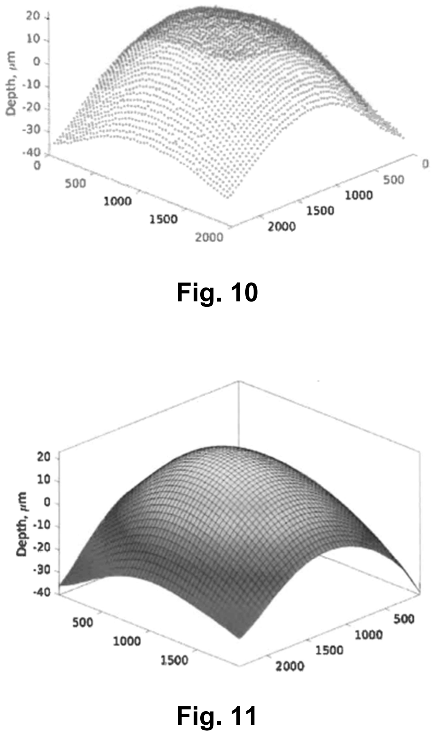

In einem weiteren Schritt 92 wird eine zweite Punktwolke der Punkte des Punktgitters basierenden auf den bestimmten Mittelwerten der Tiefenwerte der Punkte des Punktgitters und den zuvor bestimmten, ersten Korrekturwerten erzeugt, wobei die Mittelwerte der Punkte des Punktgitters mittels der ersten Korrekturwerte korrigiert werden. Eine exemplarische Darstellung einer zweiten Punktwolke des Punktgitters ist in Fig. 10 dargestellt.

In einem weiteren Schritt 94 wird eine gewölbte Funktion an die zweite Punktwolke eingepasst. Die gewölbte Funktion kann eine konvexe oder eine konkave Funktion sein. Die gewölbte Funktion kann eine polynomische Funktion sein, bei der die Tiefenwerte als Funktion der X-Werte in X-Richtung und Y-Werte in Y-Richtung definiert sind. Die gewölbte Funktion hat vorzugsweise in der Mitte des erfassten Bereichs ein Extremum, insbesondere ein Maximum. Eine exemplarische Darstellung einer eingepassten, gewölbten Funktion an die zweite Punktwolke aus Fig. 10 ist in Fig. 11 dargestellt.

In einem weiteren Schritt 96 werden die zweiten Korrekturwerte basierend auf einer Wölbung der gewölbten Funktion bestimmt. Mit anderen Worten wird jeder zweite Korrekturwert basierend auf einer Abweichung der eingepassten, gewölbten Funktion gegenüber einer horizontalen Ebene bestimmt.

In einem weiteren Schritt 98 werden die segmentierten Tiefenwerte jedes Punkts des Punktgitters basierend auf den ersten und zweiten Korrekturwerten korrigiert.

In einem weiteren Schritt 100 wird für jeden Punkt des Punktgitters ein dritter Korrekturwert und ein vierter Korrekturwert basierend auf einer Kostenfunktion L zwischen einem Astigmatismus-Modell und den korrigierten Tiefenwerten des jeweiligen Punkts des Punktgitters bestimmt. Als Astigmatismus-Modell kann eine Linearkombination aus zwei radial-symmetrischen Sinus-Funktionen verwendet werden. Das Astigmatismus-Modell kann beispielsweise durch die Formel $\alpha \sin\theta + \beta \cos\theta$ definiert werden. Dabei sind $\alpha$ und $\beta$ die Koeffizienten der Sinusfunktionen und $\theta$ ein Winkel in der X-Y Ebene um den Mittelpunkt des jeweiligen Punkts des Punktgitters. Die Kostenfunktion L ist entsprechend der Gleichung (16) definiert.

$$L(\alpha, \beta) = \sum |f(r, \theta) - (\alpha \sin\theta + \beta \cos\theta)|^2 \qquad (16)$$

In der Kostenfunktion wird dabei eine Summe über diejenigen Punkte der Tiefenkarte gebildet, die dem entsprechenden Punkt des Punktgitters zugeordnet sind bzw. diesen abbilden. Die Lage dieser Punkte in der X-Y Ebene kann in Polarkoordinaten r und θ bezüglich des Mittelpunkts des jeweiligen Punkts des Punktgitters angegeben werden. f(r, θ) gibt die Abweichung des Tiefenwerts dieser Punkte der Tiefenkarte gegenüber dem gemittelten Tiefenwert des Punkts des Punktgitters an. Die Kostenfunktion wird dann nach den Koeffizienten der Sinus-Funktionen minimiert. Der dritte und vierte Korrekturwert des Punkts des Punktgitters kann dann auf Basis der minimierten Koeffizienten $\alpha$ und $\beta$ bestimmt werden. Insbesondere entsprechen der dritte und vierte Korrekturwert des Punkts des Punktgitters den minimierten Koeffizienten.

In einem weiteren Schritt 102 werden die dritten und vierten Korrekturwerte der Punkte der Tiefenkarte basierend auf den dritten und vierten Korrekturwerten jedes Punkts des Punktgitters über den gesamten Bereich interpoliert. Auf diese Weise kann jedem Punkt der Tiefenkarte ein dritter und vierter Korrekturwert zugeordnet werden.

In Fig. 13 ist die Bestimmung der Korrekturwerte nochmals kurz zusammengefasst. Abbildung (A) zeigt den Bereich des Punkgitters, der mittels des optischen Sensors erfasst wird. Abbildung (B) zeigt eine Tiefenkarte des Bereichs des Punktgitters ohne Korrektur der Tiefenwerte. Abbildung (C) zeigt die Tiefenwerte eines segmentierten Punkt des Punktgitters. Abbildung (D) zeigt die Tiefenwerte des segmentierten Punkts des Punktgitters, nachdem der erste Korrekturwert und der zweite Korrekturwert bestimmt wurden und die Tiefenwerte auf Basis des ersten und zweiten Korrekturwerts korrigiert wurden. Abbildung (E) zeigt die Tiefenwerte des segmentierten Punkts des Punktgitters, nachdem der dritte Korrekturwert und der vierte Korrekturwert bestimmt wurden und die Tiefenwerte auf Basis des dritten und vierten Korrekturwerts korrigiert wurden.

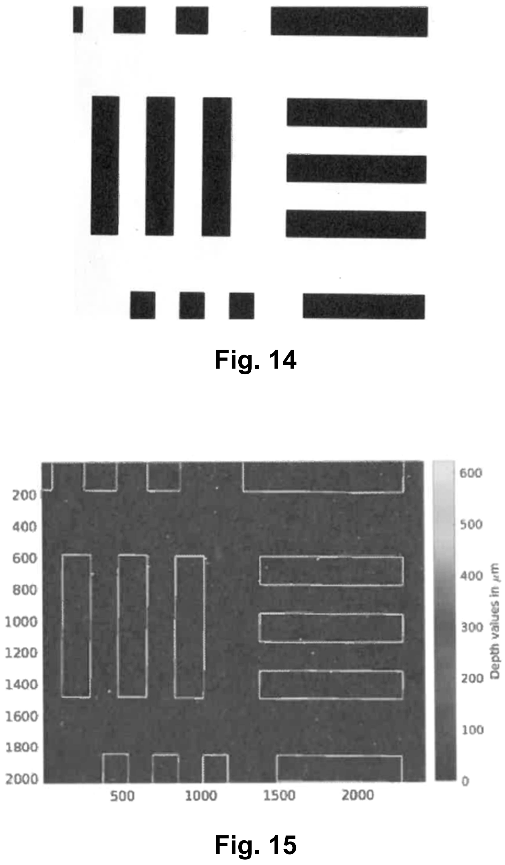

In den Fig. 14-20 ist die Anwendung des Verfahrens 60 aus Fig. 3 auf eine USAF-Auflösungstesttafel, auch USAF-Testobjekt genannt, als Werkstück 12 beschrieben. Das USAF-Testobjekt ist ein standardisiertes Testobjekt zur Bestimmung des Auflösungsvermögens von optischen Instrumenten.

Das Beispiel der USAF-Auflösungstesttafel eignet sich besonders, um die Korrektur des Astigmatismus-Fehlers zu veranschaulichen. Die USAF-Auflösungstesttafel ist eine flache Ebene mit schwarzen und Weisen Flächen. Insbesondere können auf weißen Untergrund schwarze Rechtecke aufgebracht sein. Ein Ausschnitt einer USAF-Auflösungstesttafel ist in Fig. 14 gezeigt. Der Astigmatismus-Fehler tritt insbesondere an den Übergängen zwischen schwarzen und weißen Flächen, sprich an den Rändern der Rechtecke auf.

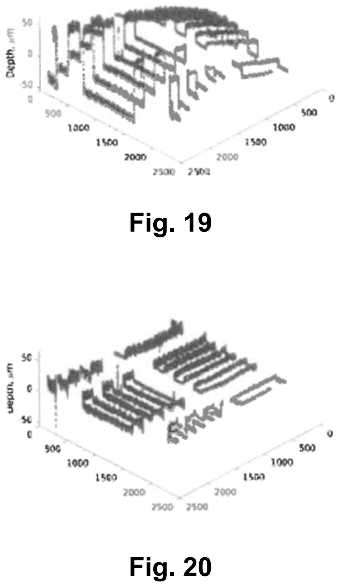

Zuerst wird für einen Bereich der Oberfläche der USAF-Auflösungstesttafel eine Tiefenkarte mittels der Verfahren aus Fig. 2 und 3 erzeugt. Exemplarische Darstellungen in 2D und 3D Ansicht sind in den Figuren 15 und 19 dargestellt, ohne Korrektur des Astigmatismus-Fehlers. Auf Basis der erzeugten Tiefenkarte und des entsprechenden Fokalbildstapels kann dann ein EDOF Bild des erfassten Bereichs der Oberfläche der USAF-Auflösungstesttafel erzeugt werden.

Exemplarische Darstellungen der Tiefenkarte der Figuren 15 und 19 zeigen, dass die Tiefenkarte weitestgehend flach ist mit Ausnahme Kanten, die rechteckig verlaufen. Diese Kanten weisen je nach Richtung andere Tiefenwerte auf. Diese Kanten verlaufen entsprechend der Kanten der Rechtecke der USAF-Auflösungstesttafel. Die Abweichungen der Tiefenwerte an den Kanten der Rechtecke sind ein Resultat des Astigmatismus-Fehlers. Da das reale Oberflächenprofil der USAF-Auflösungstesttafel eine ebene Fläche ist, müssen die Kanten der Rechtecke auf gleicher Höhe sein und daher denselben Tiefenwert aufweisen.

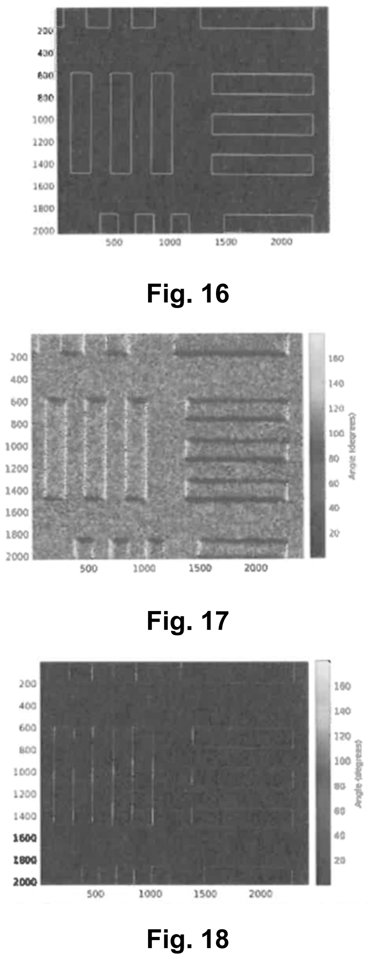

Um den Astigmatismus-Fehler zu korrigieren wird zunächst aus dem EDOF-Bild oder mit Hilfe des gesamten oder eines Teils des Fokalbildstapels eine Gradientenkarte errechnet. Die Gradientenkarte stellt den Bildgradienten für jeden Punkt dar. Die Stärke des Bildgradienten ist exemplarisch in Fig. 16 dargestellt.

Auf Basis des Bildgradienten wird dann für jeden Punkt des EDOF Bildes ein Winkel des Bildgradienten bestimmt, wobei die bestimmten Winkel eine Winkelkarte bilden. Eine exemplarische Winkelkarte ist in Fig. 17 dargestellt.

Mittels der erzeugten Winkelkarte sowie der dritten und vierten Korrekturwerte wird dann die Tiefenkarte der USAF-Auflösungstesttafel korrigiert. In den Figuren 18 und 20 ist eine exemplarische, korrigierte Tiefenkarte der USAF-Auflösungstesttafel dargestellt. Dabei weisen die Kanten, die in den Fig. 15 und 19 unterschiedliche Tiefenwerte hatten, im Wesentlichen gleiche Tiefenwerten auf. Mit anderen Worten hat der beschriebene Korrekturmechanismus dazu geführt, dass die Kanten in der Tiefenkarte nun entsprechend dem realen Oberflächenprofil auf gleicher Höhe angeordnet sind.

Des Weiteren weist die vorliegende Offenbarung Ausführungsformen gemäß den folgenden Klauseln auf:

Klausel 1. Computerimplementiertes Verfahren (40) zum Erzeugen einer Tiefenkarte eines Bereichs einer Oberfläche eines Werkstücks (12), mit den folgenden Schritten:

- Empfangen (42) eines Fokalbildstapels, wobei der Fokalbildstapel eine Mehrzahl von Bildern des Werkstücks (12) aufweist, wobei die Bilder den Bereich der Oberfläche des Werkstücks (12) mit in einer Tiefenrichtung unterschiedlichen, definierten Fokalebenenpositionen (22) abbilden, wobei jedem Bild des Fokalbildstapels eine Fokalebenenposition (22) zugeordnet ist, wobei Bildpunkte der Bilder jeweils einem entsprechendem Objektpunkt auf der Oberfläche des Werkstücks (12) zugeordnet sind;

- Bestimmen (44) eines Fokuswerts jedes Bildpunkts jedes Bildes des Fokalbildstapels;

- Einpassen (46) einer Funktion entlang der Tiefenrichtung (20) an die Fokuswerte derjenigen Bildpunkte der Bilder, die demselben Objektpunkt zugeordnet sind;

- Bestimmen (48) eines Tiefenwerts jedes Objektpunkts auf der Oberfläche des Werkstücks (12) in der Tiefenrichtung (20) basierend auf einem Extremum der eingepassten Funktion; und

- Erzeugen (50) der Tiefenkarte des Bereichs der Oberfläche des Werkstücks (12) basierend auf den bestimmten Tiefenwerten.

Klausel 2. Verfahren (40) nach Klausel 1, wobei jedem Bild des Fokalbildstapels ein Tiefenwert in der Tiefenrichtung (20) zugeordnet ist, insbesondere wobei die Tiefenwerte der Bilder in diskreten Schritten aufeinander folgen.

Klausel 3. Verfahren (40) nach Klausel 1 oder 2, wobei der Fokuswert jedes Bildpunkts auf Basis einer Schärfe des Bildpunkts bestimmt wird.

Klausel 4. Verfahren (40) nach einer der Klauseln 1 bis 3, wobei die Funktion eine Gauß-Funktion ist, wobei der Tiefenwert jedes Objektpunkts dem Erwartungswert der jeweiligen Gauß-Funktion entspricht.

Klausel 5. Verfahren (40) nach Klausel 4, wobei Parameter der Gauß-Funktion über ein lineares Gleichungssystem Ax = B bestimmt werden, wobei A eine 3x3 Matrix ist, die die Koeffizienten des Gleichungssystems, B ein Vektor ist, der die Lösungen des Gleichungssystems aufweist, und x ein Vektor ist, der die zu bestimmenden Parameter der Gauß-Kurve aufweist, wobei der Tiefenwert auf Basis der Parameter bestimmt wird.

Klausel 6. Verfahren (40) nach Klausel 5, wobei die Parameter mittels der folgenden Gleichung bestimmt werden:

$$x = A^{-1} B,$$

insbesondere wobei $A^{-1}$ B einer Optimierungslösung eines überbestimmten Gleichungssystems basierend auf der Methode der kleinsten Quadrate entspricht.

Klausel 7. Verfahren (40) nach einer der Klauseln 1 bis 6, wobei das Verfahren des Weiteren den folgenden Schritt aufweist:

- Korrigieren (52) mindestens eines Abbildungsfehlers der Bilder des Fokalbildstapels in der Tiefenkarte, wobei der mindestens eine Abbildungsfehler ein Kippfehler und/oder ein Bildfeldwölbung-Fehler und/oder ein Astigmatismus-Fehler ist.

Klausel 8. Verfahren (40) nach Klausel 7, wobei zum Korrigieren des Kippfehlers jedem Punkt der Tiefenkarte ein erster Korrekturwert zugeordnet ist, wobei der Tiefenwert jedes Punkts der Tiefenkarte mittels des entsprechenden ersten Korrekturwerts korrigiert wird.

Klausel 9. Verfahren (40) nach Klausel 7 oder 8, wobei zum Korrigieren des Bildfeldwölbung-Fehlers jedem Punkt der Tiefenkarte ein zweiter Korrekturwert zugeordnet ist, wobei der Tiefenwert jedes Punkts der Tiefenkarte mittels des entsprechenden zweiten Korrekturwerts korrigiert wird.

Klausel 10. Verfahren (40) nach einer der Klauseln 7 bis 9, wobei zum Korrigieren des Astigmatismus-Fehler eine Winkelkarte des Bereichs der Oberfläche des Werkstücks erzeugt wird, wobei jedem Punkt der Tiefenkarte ein dritter Korrekturwert und ein vierter Korrekturwert zugeordnet ist, wobei der Tiefenwert jedes Punkts der Tiefenkarte basierend auf dem dritten Korrekturwert, dem vierten Korrekturwert und der Winkelkarte korrigiert wird.

Klausel 11. Verfahren (60) zum Vermessen einer Oberfläche eines Werkstücks (12) mit einem optischen Sensor (14) eines Messgeräts (10), wobei der optische Sensor (14) und das Werkstück (12) in einer Tiefenrichtung (20) voneinander beabstandet sind, mit den folgenden Schritten:

- Erfassen (68) einer Mehrzahl von Bildern eines Bereichs der Oberfläche des Werkstücks (12) mittels des optischen Sensors (14), wobei die Bilder jeweils den Bereich der Oberfläche des Werkstücks (12) mit in der Tiefenrichtung unterschiedlichen, definierten Fokalebenenpositionen (22) abbilden, wobei jeder Bildpunkt jedes Bildes einem entsprechendem Objektpunkt auf der Oberfläche des Werkstücks (12) zugeordnet ist, und wobei die erfassten Bilder einen Fokalbildstapel bilden;

- Erzeugen (70) einer Tiefenkarte der Oberfläche des Werkstücks (12) mittels des Verfahrens (40) nach einem der Klauseln 1 bis 10.

Klausel 12. Verfahren (60) nach Klausel 11, wobei der optische Sensor (14) und das Werkstück (12) in der Tiefenrichtung (20) relativ zueinander bewegbar sind, so dass ein Abstand (22) in der Tiefenrichtung (20) zwischen dem Werkstück (12) und dem optischen Sensor (14) veränderbar ist, wobei das Verfahren des Weiteren den folgenden Schritt aufweist:

- Verändern (66) des Abstands zwischen dem Werkstück (12) und dem optischen Sensor (14),

wobei in dem Schritt des Erfassens (68) die Mehrzahl von Bildern erfasst wird, während der Abstand (22) zwischen dem Werkstück (12) und dem optischen Sensor (14) verändert wird, wobei die Bilder jeweils den Bereich der Oberfläche des Werkstücks (12) aus unterschiedlichen, definierten Abständen (22) zu dem Werkstück (12) in der Tiefenrichtung (20) abbilden.

Klausel 13. Verfahren (60) nach Klausel 12, wobei das Messgerät (10) einen Werkstückhalter (16) aufweist, wobei das Werkstück (12) auf dem Werkstückhalter (16) zum Vermessen angeordnet wird.

Klausel 14. Verfahren (60) nach Klausel 13, wobei das Messgerät (10) eine Antriebseinrichtung (28) aufweist, wobei die Antriebseinrichtung (28) den optischen Sensor (14) relativ zu dem Werkstückhalter (16) in der Tiefenrichtung (20) bewegt und/oder den Werkstückhalter (16) relativ zu dem optischen Sensor (14) in der Tiefenrichtung (20) bewegt, um den Abstand (22) zwischen dem Werkstück (12) und dem optischen Sensor (14) zu verändern.

Klausel 15. Verfahren (60) nach einer der Klauseln 11 bis 14, wobei der Abstand (22) zwischen dem Werkstück (12) und dem optischen Sensor (14) in diskreten Schritten verändert wird.

Klausel 16. Verfahren (60) nach einer der Klauseln 11 bis 15, wobei das Messgerät (10) eine Beleuchtungseinrichtung (32) aufweist, wobei das Verfahren des Weiteren den folgenden Schritt aufweist:

- Beleuchten (64) des Werkstücks (12) mittels der Beleuchtungseinrichtung (32) während des Erfassens der Bilder des Fokalbildstapels.

Klausel 17. Verfahren (60) nach einer der Klauseln 11 bis 16, wobei das Verfahren des Weiteren den folgenden Schritt aufweist:

- Bestimmen (62) des ersten Korrekturwerts und/oder des zweiten Korrekturwerts und/oder des dritten und vierten Korrekturwerts für jeden Punkt der Tiefenkarte, wobei vor dem Vermessen des Werkstücks eine Tiefenkarte eines Kalibrationsobjekts, insbesondere eines Punktgitters, erzeugt wird, wobei der jeweilige Korrekturwert basierend auf einer Abweichung der Tiefenkarte zu einem bekannten Oberflächenprofil des Kalibrationsobjekts bestimmt wird.

Klausel 18. Verfahren (60) nach Klausel 17, wobei das Bestimmen der ersten Korrekturwerte die folgenden Schritte aufweist:

- Erzeugen (86) einer ersten Punktwolke aller Punkte des Punktgitters basierend auf Mittelwerten der Tiefenwerte jedes einzelnen Punkts des Punktgitters;

- Einpassen (88) einer Ebene durch die erste Punktwolke; und

- Bestimmen (90) der ersten Korrekturwerte basierend auf einem Kippwinkel einer Normalen der Ebene gegenüber der Tiefenrichtung.

Klausel 19. Verfahren (60) nach Klausel 17 oder 18, wobei das Bestimmen der zweiten Korrekturwerte die folgenden Schritte aufweist:

- Erzeugen (92) einer zweiten Punktwolke aller Punkte des Punktgitters basierenden auf Mittelwerten der Tiefenwerte jedes einzelnen Punkts des Punktgitters;

- Einpassen (94) einer gewölbten Funktion an die zweite Punktwolke; und

- Bestimmen (96) der zweiten Korrekturwerte basierend auf einer Wölbung der gewölbten Funktion.

Klausel 20. Verfahren (60) nach einer der Klauseln 17 bis 19, wobei das Bestimmen der dritten und vierten Korrekturwerte die folgenden Schritte aufweist:

- Bestimmen (100) des dritten Korrekturwerts und des vierten Korrekturwerts für jeden Punkt des Punktgitters basierend auf einer Kostenfunktion zwischen einem Astigmatismus-Modell und den Tiefenwerten des jeweiligen Punkts; und
- Interpolieren (102) der dritten und vierten Korrekturwerte basierend auf den dritten und vierten Korrekturwerten jedes Punkts des Punktgitters.

Klausel 21. Verfahren (60) nach einer der Klauseln 11 bis 20, wobei das Verfahren des Weiteren den folgenden Schritt aufweist:

- Ausgeben (72) der Tiefenkarte mittels einer Ausgabeeinrichtung (36).

Klausel 22. Messgerät (10), insbesondere ein Koordinatenmessgerät oder ein Mikroskop, zum Vermessen einer Oberfläche eines Werkstücks (12), wobei das Messgerät (10) einen Werkstückhalter (16) für das Werkstück (12), einen optischen Sensor (14) und eine Steuereinrichtung (26) aufweist, wobei der optische Sensor (14) dazu ausgebildet ist, Bilder eines Bereichs der Oberfläche des Werkstücks (12) zu erfassen, wobei der optische Sensor (14) und das Werkstück (12) in einer Tiefenrichtung (20) voneinander beabstandet sind, wobei die Steuereinrichtung (26) dazu eingerichtet ist, die folgenden Schritte durchzuführen:

- Erzeugen einer Tiefenkarte der Oberfläche des Werkstücks (12) mittels des Verfahrens nach einer der Klauseln 1 bis 10.

Klausel 23. Messgerät nach Klausel 22, wobei das Messgerät (10) des Weiteren eine Antriebseinrichtung (28) aufweist, wobei die Antriebseinrichtung (28) dazu ausgebildet ist, den optischen Sensor (14) und den Werkstückhalter (16) in der Tiefenrichtung (20) relativ zueinander zu bewegen, um einen Abstands (22) zwischen dem Werkstück (12) und dem optischen Sensor (14) zu verändern.

Klausel 24. Messgerät nach Klausel 22 oder 23, wobei die Steuereinrichtung (26) des Weiteren dazu eingerichtet ist, die folgenden Schritte, insbesondere vor dem Schritt des Erzeugens der Tiefenkarte, durchzuführen:

- Steuern des optischen Sensors (14) derart, dass eine Mehrzahl von Bildern eines Bereichs der Oberfläche des Werkstücks (12) mittels des optischen Sensors (14) erfasst wird, wobei die Bilder jeweils den Bereich der Oberfläche des Werkstücks (12) mit in der Tiefenrichtung unterschiedlichen, definierten Fokalebenenpositionen (22) abbilden, wobei jeder Bildpunkt jedes Bildes einem entsprechendem Objektpunkt auf der Oberfläche des Werkstücks (12) zugeordnet ist, und wobei die erfassten Bilder einen Fokalbildstapel bilden.

Klausel 25. Messgerät nach Klausel 24, wobei die Steuereinrichtung (26) des Weiteren dazu eingerichtet ist, die folgenden Schritte, insbesondere vor dem Schritt des Erzeugens der Tiefenkarte, durchzuführen:

- Steuern der Antriebseinrichtung (28) derart, dass ein Abstand (22) zwischen dem Werkstück (12) und dem optischen Sensor (14) verändert wird,

wobei der optische Sensor (14) derart gesteuert wird, dass die Mehrzahl von Bildern erfasst wird, während der Abstand (22) zwischen dem Werkstück (12) und dem optischen Sensor (14) verändert wird, wobei die Bilder jeweils den Bereich der Oberfläche des Werkstücks (12) aus unterschiedlichen, definierten Abständen (22) zu dem Werkstück (12) in der Tiefenrichtung (20) abbilden.

Klausel 26. Computerprogrammprodukt mit einem Computerprogramm, das Programmcodemittel zur Durchführung eines Verfahren (40) nach einer der Klauseln 1 bis 10 aufweist, wenn das Computerprogramm auf einem Messgerät (10) ausgeführt wird.

**Patentansprüche**

1. Computerimplementiertes Verfahren (40) zum Erzeugen einer Tiefenkarte eines Bereichs einer Oberfläche eines Werkstücks (12), mit den folgenden Schritten:

   - Empfangen (42) eines Fokalbildstapels, wobei der Fokalbildstapel eine Mehrzahl von Bildern des Werkstücks (12) aufweist, wobei die Bilder den Bereich der Oberfläche des Werkstücks (12) mit in einer Tiefenrichtung unterschiedlichen, definierten Fokalebenenpositionen (22) abbilden, wobei jedem Bild des Fokalbildstapels eine Fokalebenenposition (22) zugeordnet ist, wobei Bildpunkte der Bilder jeweils einem entsprechendem Objektpunkt auf der Oberfläche des Werkstücks (12) zugeordnet sind;
   - Bestimmen (44) eines Fokuswerts jedes Bildpunkts jedes Bildes des Fokalbildstapels;
   - Einpassen (46) einer Funktion entlang der Tiefenrichtung (20) an die Fokuswerte derjenigen Bildpunkte der Bilder, die demselben Objektpunkt zugeordnet sind, wobei die Funktion eine Gauß-Funktion ist, wobei der Tiefenwert jedes Objektpunkts dem Erwartungswert der jeweiligen Gauß-Funktion entspricht, wobei Parameter der Gauß-Funktion über ein lineares Gleichungssystem $Ax = B$ bestimmt werden, wobei A eine 3x3 Matrix ist, die die Koeffizienten des Gleichungssystems, B ein Vektor ist, der die Lösungen des Gleichungssystems aufweist, und x ein Vektor ist, der die zu bestimmenden Parameter der Gauß-Kurve aufweist, wobei der Tiefenwert auf Basis der Parameter bestimmt wird, wobei die Parameter mittels der Gleichung $x = A^{-1} B$ bestimmt werden:
   - Bestimmen (48) eines Tiefenwerts jedes Objektpunkts auf der Oberfläche des Werkstücks (12) in der Tiefenrichtung (20) basierend auf einem Extremum der eingepassten Funktion; und
   - Erzeugen (50) der Tiefenkarte des Bereichs der Oberfläche des Werkstücks (12) basierend auf den bestimmten Tiefenwerten;

   wobei das Verfahren des Weiteren den folgenden Schritt aufweist:

   - Korrigieren (52) mindestens eines Abbildungsfehlers der Bilder des Fokalbildstapels in der Tiefenkarte, wobei der mindestens eine Abbildungsfehler ein Kippfehler und/oder ein Bildfeldwölbung-Fehler und/oder ein Astigmatismus-Fehler ist.

2. Verfahren (40) nach Anspruch 1, wobei jedem Bild des Fokalbildstapels ein Tiefenwert in der Tiefenrichtung (20) zugeordnet ist, insbesondere wobei die Tiefenwerte der Bilder in diskreten Schritten aufeinander folgen.

3. Verfahren (40) nach Anspruch 1 oder 2, wobei der Fokuswert jedes Bildpunkts auf Basis einer Schärfe des Bildpunkts bestimmt wird.

4. Verfahren (40) nach einem der Ansprüche 1 bis 3, wobei $A^{-1} B$ einer Optimierungslösung eines überbestimmten Gleichungssystems basierend auf der Methode der kleinsten Quadrate entspricht.

5. Verfahren (40) nach Anspruch 4, wobei zum Korrigieren des Kippfehlers jedem Punkt der Tiefenkarte ein erster Korrekturwert zugeordnet ist, wobei der Tiefenwert jedes Punkts der Tiefenkarte mittels des entsprechenden ersten Korrekturwerts korrigiert wird.

6. Verfahren (40) nach einem der Ansprüche 1 bis 5, wobei zum Korrigieren des Bildfeldwölbung-Fehlers jedem Punkt der Tiefenkarte ein zweiter Korrekturwert zugeordnet ist, wobei der Tiefenwert jedes Punkts der Tiefenkarte mittels des entsprechenden zweiten Korrekturwerts korrigiert wird.

7. Verfahren (40) nach einem der Ansprüche 1 bis 6, wobei zum Korrigieren des Astigmatismus-Fehler eine Winkelkarte des Bereichs der Oberfläche des Werkstücks erzeugt wird, wobei jedem Punkt der Tiefenkarte ein dritter Korrekturwert und ein vierter Korrekturwert zugeordnet ist, wobei der Tiefenwert jedes Punkts der Tiefenkarte basierend auf dem dritten Korrekturwert, dem vierten Korrekturwert und der Winkelkarte korrigiert wird.

8. Verfahren (60) zum Vermessen einer Oberfläche eines Werkstücks (12) mit einem optischen Sensor (14) eines Messgeräts (10), wobei der optische Sensor (14) und das Werkstück (12) in einer Tiefenrichtung (20) voneinander beabstandet sind, mit den folgenden Schritten:

- Erfassen (68) einer Mehrzahl von Bildern eines Bereichs der Oberfläche des Werkstücks (12) mittels des optischen Sensors (14), wobei die Bilder jeweils den Bereich der Oberfläche des Werkstücks (12) mit in der Tiefenrichtung unterschiedlichen, definierten Fokalebenenpositionen (22) abbilden, wobei jeder Bildpunkt jedes Bildes einem entsprechendem Objektpunkt auf der Oberfläche des Werkstücks (12) zugeordnet ist, und wobei die erfassten Bilder einen Fokalbildstapel bilden;
- Erzeugen (70) einer Tiefenkarte der Oberfläche des Werkstücks (12) mittels des Verfahrens (40) nach einem der Ansprüche 1 bis 7.

9.  Verfahren (60) nach Anspruch 8, wobei der optische Sensor (14) und das Werkstück (12) in der Tiefenrichtung (20) relativ zueinander bewegbar sind, so dass ein Abstand (22) in der Tiefenrichtung (20) zwischen dem Werkstück (12) und dem optischen Sensor (14) veränderbar ist, wobei das Verfahren des Weiteren den folgenden Schritt aufweist:

- Verändern (66) des Abstands zwischen dem Werkstück (12) und dem optischen Sensor (14), wobei in dem Schritt des Erfassens (68) die Mehrzahl von Bildern erfasst wird, während der Abstand (22) zwischen dem Werkstück (12) und dem optischen Sensor (14) verändert wird, wobei die Bilder jeweils den Bereich der Oberfläche des Werkstücks (12) aus unterschiedlichen, definierten Abständen (22) zu dem Werkstück (12) in der Tiefenrichtung (20) abbilden.

10. Verfahren (60) nach Anspruch 9, wobei das Messgerät (10) einen Werkstückhalter (16) aufweist, wobei das Werkstück (12) auf dem Werkstückhalter (16) zum Vermessen angeordnet wird.

11. Verfahren (60) nach Anspruch 10, wobei das Messgerät (10) eine Antriebseinrichtung (28) aufweist, wobei die Antriebseinrichtung (28) den optischen Sensor (14) relativ zu dem Werkstückhalter (16) in der Tiefenrichtung (20) bewegt und/oder den Werkstückhalter (16) relativ zu dem optischen Sensor (14) in der Tiefenrichtung (20) bewegt, um den Abstand (22) zwischen dem Werkstück (12) und dem optischen Sensor (14) zu verändern.

12. Verfahren (60) nach einer der Ansprüche 8 bis 11, wobei der Abstand (22) zwischen dem Werkstück (12) und dem optischen Sensor (14) in diskreten Schritten verändert wird.

13. Verfahren (60) nach einem der Ansprüche 8 bis 12, wobei das Verfahren des Weiteren den folgenden Schritt aufweist:

- Bestimmen (62) des ersten Korrekturwerts und/oder des zweiten Korrekturwerts und/oder des dritten und vierten Korrekturwerts für jeden Punkt der Tiefenkarte, wobei vor dem Vermessen des Werkstücks eine Tiefenkarte eines Kalibrationsobjekts, insbesondere eines Punktgitters, erzeugt wird, wobei der jeweilige Korrekturwert basierend auf einer Abweichung der Tiefenkarte zu einem bekannten Oberflächenprofil des Kalibrationsobjekts bestimmt wird.

14. Messgerät (10), insbesondere ein Koordinatenmessgerät oder ein Mikroskop, zum Vermessen einer Oberfläche eines Werkstücks (12), wobei das Messgerät (10) einen Werkstückhalter (16) für das Werkstück (12), einen optischen Sensor (14) und eine Steuereinrichtung (26) aufweist, wobei der optische Sensor (14) dazu ausgebildet ist, Bilder eines Bereichs der Oberfläche des Werkstücks (12) zu erfassen, wobei der optische Sensor (14) und das Werkstück (12) in einer Tiefenrichtung (20) voneinander beabstandet sind, wobei die Steuereinrichtung (26) dazu eingerichtet ist, die folgenden Schritte durchzuführen:

- Erzeugen einer Tiefenkarte der Oberfläche des Werkstücks (12) mittels des Verfahrens nach einem der Ansprüche 1 bis 7.

15. Computerprogrammprodukt mit einem Computerprogramm, das Programmcodemittel zur Durchführung eines Verfahren (40) nach einem der Ansprüche 1 bis 7 aufweist, wenn das Computerprogramm auf einem Messgerät (10) ausgeführt wird.

**Fig. 1**

**Fig. 2**

**Fig. 3**

62

**Fig. 4**

**Fig. 5**

**Fig. 6**

**(B)**                         **(A)**

**Fig. 7**

**Fig. 8**

**Fig. 9**

**Fig. 10**

**Fig. 11**

**Fig. 12**

**(A)**  **(B)**  **(C)**

**(D)**  **(E)**

**Fig. 13**

Fig. 14

Fig. 15

**Fig. 16**

**Fig. 17**

**Fig. 18**

**Fig. 19**

**Fig. 20**

Europäisches Patentamt

European Patent Office

Office européen des brevets

# EUROPÄISCHER RECHERCHENBERICHT

**Nummer der Anmeldung**

EP 26 15 3520

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 5 151 609 A (NAKAGAWA YASUO [JP] ET AL) 29. September 1992 (1992-09-29) * Zusammenfassung; Anspruch 1 * * Spalten 3-6; Abbildungen 1-5 * ----- | 1-15 | INV. G01B11/00 G01B11/24 G01B21/04 G02B21/24 |
| Y | NAYAR S. K. ET AL: "SHAPE FROM FOCUS", ARXIV - ARXIV:2503.21745 CORNELL UNIVERSITY, Bd. 16., Nr. 08., August 1994 (1994-08), Seiten 824-831., XP000464936, DOI: 10.1109/34.308479 * Zusammenfassung; Abbildungen 3-9 * * sections III-VII * ----- | 1-15 | G02B21/36 G06T7/571 |
| Y | HONGWEI GUO: "A Simple Algorithm for Fitting a Gaussian Function [DSP Tips and Tricks]", IEEE SIGNAL PROCESSING MAGAZINE IEEE, USA, Bd. 28, Nr. 5, September 2011 (2011-09), Seiten 134-137, XP011382173, ISSN: 1053-5888, DOI: 10.1109/MSP.2011.941846 * Seiten 134-136 * ----- | 1-15 | |
| Y | US 2009/088999 A1 (BRYLL ROBERT K [US]; MITUTOYO CORP [JP]; DELANEY MARK L [US]) 2. April 2009 (2009-04-02) * Absätze [0001] - [0010], [0028] - [0032]; Ansprüche 1, 2; Abbildungen 1, 2 * * Absätze [0080] - [0105]; Abbildungen 5, 6 * * Absätze [0146] - [0157] * ----- -/-- | 1-15 | RECHERCHIERTE SACHGEBIETE (IPC) G01B G02B G06T |

Der vorliegende Recherchenbericht wurde für alle Patentansprüche erstellt

| Recherchenort | Abschlußdatum der Recherche | Prüfer |
|---|---|---|
| München | 8. April 2026 | Burkart, Johannes |

Seite 1 von 2

37

Europäisches
Patentamt

European
Patent Office

Office européen
des brevets

**EUROPÄISCHER RECHERCHENBERICHT**

**Nummer der Anmeldung**

EP 26 15 3520

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2020/214811 A1 (VERKER TAL [IL] ET AL) 9. Juli 2020 (2020-07-09) <br> * Absätze [0023] - [0042]; Abbildungen 1A,B * <br> * Absätze [0069] - [0110]; Abbildungen 5A-E, 6 * <br> ----- | 1-15 | |
| E | EP 4 227 636 A1 (ZEISS CARL INDUSTRIELLE MESSTECHNIK GMBH [DE]) 16. August 2023 (2023-08-16) <br> * das ganze Dokument * <br> ----- | 1-15 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 8. April 2026 | Burkart, Johannes |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 26 15 3520

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-04-2026

| Im Recherchenbericht angeführtes Patentdokument | Datum der Veröffentlichung | Mitglied(er) der Patentfamilie | Datum der Veröffentlichung |
|---|---|---|---|
| US 5151609 A | 29-09-1992 | JP 2928548 B2 | 03-08-1999 |
| | | JP H0363507 A | 19-03-1991 |
| | | US 5151609 A | 29-09-1992 |
| US 2009088999 A1 | 02-04-2009 | CN 101738728 A | 16-06-2010 |
| | | DE 102009046295 A1 | 27-05-2010 |
| | | US 2009088999 A1 | 02-04-2009 |
| | | US 2013061650 A1 | 14-03-2013 |
| US 2020214811 A1 | 09-07-2020 | CN 107076985 A | 18-08-2017 |
| | | CN 112987288 A | 18-06-2021 |
| | | CN 117008325 A | 07-11-2023 |
| | | DK 3180584 T3 | 03-08-2020 |
| | | EP 3180584 A2 | 21-06-2017 |
| | | EP 3693696 A1 | 12-08-2020 |
| | | US 2016045291 A1 | 18-02-2016 |
| | | US 2017265970 A1 | 21-09-2017 |
| | | US 2019192263 A1 | 27-06-2019 |
| | | US 2019247164 A1 | 15-08-2019 |
| | | US 2020113657 A1 | 16-04-2020 |
| | | US 2020214811 A1 | 09-07-2020 |
| | | US 2021145551 A1 | 20-05-2021 |
| | | US 2021145552 A1 | 20-05-2021 |
| | | US 2022023015 A1 | 27-01-2022 |
| | | US 2022257353 A1 | 18-08-2022 |
| | | US 2023293272 A1 | 21-09-2023 |
| | | US 2024341928 A1 | 17-10-2024 |
| | | US 2025143850 A1 | 08-05-2025 |
| | | WO 2016024158 A2 | 18-02-2016 |
| EP 4227636 A1 | 16-08-2023 | EP 4227636 A1 | 16-08-2023 |
| | | EP 4379445 A2 | 05-06-2024 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2598836 B1

- EP 2598836 A1

**In der Beschreibung aufgeführte Nicht-Patentliteratur**

- **VON SHREE K. NAYAR**. Shape From Focus Sytem. *IEEE Conference on Computer Vision and Pattern Recognition (CVPR)*, 1992, 302-308

- Optical Measurement of Surface Topography. **VON FRANZ HELMLI**. Focus Variation Instruments. Springer, 131-166